# EUROPEAN PATENT APPLICATION

(11) **EP 4 131 816 A1**
(43) Date of publication of application: **08.02.2023**
(21) Application number: 21788239.8
(22) Date of filing: 17.04.2021
(51) Int. Cl.: H04L 1/16

(54) **LINK PROCESSING METHOD, MULTI-LINK DEVICE AND COMPUTER-READABLE STORAGE MEDIUM**

(30) Priority: 18.04.2020 CN 202010308652
(71) Applicant: Huawei Technologies Co., Ltd., Shenzhen, Guangdong 518129, (CN)
(72) Inventor: HUANG, Guogang, Shenzhen, Guangdong 518129 (CN); GAN, Ming, Shenzhen, Guangdong 518129 (CN); ZHOU, Yifan, Shenzhen, Guangdong 518129 (CN); GUO, Yuchen, Shenzhen, Guangdong 518129 (CN); LI, Yunbo, Shenzhen, Guangdong 518129 (CN)
(74) Representative: Maiwald GmbH
(86) International application number: PCT/CN2021/087955
(87) International publication number: WO 2021/209059

(57) **Abstract**

This application relates to the communications field, and in particular, to a link processing method and a device. In a method, first information received by a first MLD on a first link is used to determine whether a BSS configuration of a second link is updated. If the BSS configuration of the second link is not updated, the first MLD directly transmits a data frame on the switched-to second link or the second link whose status is transited, and does not need to transmit the data frame until a beacon frame is received and a latest parameter of the BSS configuration is obtained on the switched-to second link or the second link whose status is transited. Therefore, the method reduces a waiting time required before the data frame is transmitted. In another method, a first MLD sends second information to a second MLD, to obtain a message about an updated parameter or a not updated BSS configuration of a second link on a first link. In this way, the first MLD can directly transmit a data frame and does not need to wait for a beacon frame to be received on the switched-to second link or the second link whose status is transited. The method also reduces a waiting time required before the data frame is transmitted.

## Description

This application claims priority to Chinese Patent Application No. 202010308652.7, filed with the China National Intellectual Property Administration on April 18, 2020 and entitled "LINK PROCESSING METHOD, MULTI-LINK DEVICE, AND COMPUTER-READABLE STORAGE MEDIUM", which is incorporated herein by reference in its entirety.

### TECHNICAL FIELD

This application relates to the communications field, and in particular, to a link processing method, a multi-link device, and a computer-readable storage medium.

### BACKGROUND

To achieve extremely high throughput, a next generation standard of a wireless local area network (Wireless Local Area Network, WLAN) uses a multi-link as a key technology. The multi-link is that each WLAN device has a multi-band transmit and receive capability, to improve throughput on a larger bandwidth. The multiband includes but is not limited to 2.4 GHz, 5 GHz, 6 GHz, and the like. Access and transmission on a plurality of frequency bands are referred to as a multi-link. In addition, a device that supports a plurality of links is referred to as a multi-link device.

The multi-link device includes a multi-radio multi-link device and a single-radio multi-link device. The multi-radio multi-link device has a plurality of radio frequency modules, and the radio frequency modules may separately work on different frequency bands or channels. When a channel spacing between the radio frequency modules that separately work is large enough, links may operate independently without mutual interference. The multi-radio multi-link device works in an energy-saving mode. A link without data transmission may be enabled to be in a doze or disable state. A link with data transmission may be enabled to be in an active or enable state. That is, the link needs to transit from a doze or disable state to an active or enable state. The single-radio multi-link device having a single radio frequency module can work on different frequency bands or channels, but can work only on one frequency band at any moment, that is, needs to switch from one link to another link.

For a link whose link status is transited or a switched-to link, to transmit a data frame, a beacon (beacon) frame further needs to be received on the link whose status is transited or the switched-to link, to obtain a latest BSS configuration required for data transmission on the link.

It can be learned that, this process causes an excessively long waiting time required from a time when it is determined to transit the link status or switch to the link to a time when the data frame can be transmitted. In other words, fast transition between link statuses or fast switching between links cannot be implemented.

### SUMMARY

This application provides a link processing method, a multi-link device, and a computer-readable storage medium, to implement fast transition between link statuses or fast switching between links.

According to a first aspect, this application provides a link processing method. In the method, a plurality of links between a first MLD and a second MLD may include a first link and a second link. The first MLD may receive first information of the second link on the first link. The first information is used by the first MLD to determine whether a BSS configuration of the second link is updated. If the BSS configuration of the second link is not updated, the first MLD may transmit a data frame on the switched-to second link or the second link whose status is transited, and does not need to transmit the data frame until a beacon frame is received and a latest parameter of the BSS configuration is obtained on the switched-to second link or the second link whose status is transited. Therefore, the method reduces a waiting time required before the data frame is transmitted on the switched-to second link or the second link whose status is transited.

In addition, if a data frame on the first link needs to be switched to the second link, in the method, before switching from the first link to the second link, the first MLD can learn that the BSS configuration of the second link is not updated. In this way, the first MLD can directly transmit the data frame on the switched-to second link, and does not need to transmit the data frame until a beacon frame is received and a latest BSS configuration is obtained after switching. Therefore, in the method, impact duration of a link switching process on data frame transmission is shortened. If a data frame on the first link needs to be offloaded to the second link, in the method, before a status of the second link is transited, the first MLD can learn that the BSS configuration of the second link is not updated, and can directly transmit the data frame on the second link whose status is transited without waiting for a beacon frame to be received. Therefore, duration required for data frame offloading transmission is shortened.

The first link is a link in an enable state. The second link is a switched-to link or a link whose link status is transited.

Optionally, the data frame may be an uplink data frame, a quality of service null (QoS NULL) frame, or a link status notification frame. The link status notification frame indicates that the second link is in an awake (awake) or enable (enable) state, so that the second MLD sends a downlink data frame on the second link in time. In addition, the uplink data frame and the quality of service null (QoS NULL) frame can also notify the second MLD that the second link is in the awake or enable state.

In another optional implementation, if the BSS configuration of the second link is updated, the method further includes: The first MLD sends second information on the second link. The second information is a sequence number of the BSS configuration, an access point configuration sequence number (AP-CSN), or a check beacon (check beacon) value that is stored in the first MLD and that identifies the second link. The first MLD receives, on the second link, an updated parameter of the BSS configuration of the second link. The updated parameter of the BSS configuration of the second link is determined based on the second information.

Optionally, the second information of the second link is carried, for sending, in a unicast probe request frame on the second link. The updated parameter of the BSS configuration of the second link is carried in a probe response frame that is received on the second link. The probe response frame is returned based on the unicast probe request frame. That is, if the BSS configuration of the second link is updated, the first MLD may obtain the updated parameter of the BSS configuration of the second link through the unicast probe request frame and the probe response frame on the second link. The unicast probe request frame carries the second information. The second information is used by the second MLD to determine a parameter that needs to be updated in the BSS configuration. In an implementation, the first MLD sends the unicast probe request frame on the second link. The unicast probe request frame includes the second information. The first MLD receives, on the second link, the updated parameter of the BSS configuration of the second link. The updated parameter of the BSS configuration of the second link is obtained by the second MLD by comparing the second information with the first information.

It can be learned that, in this implementation, although the BSS configuration of the second link is updated, the first MLD may also obtain the updated parameter through one unicast probe request frame and one probe response frame, and does not need to transmit the data frame until the beacon frame is received and the entire BSS configuration is obtained. This helps reduce duration that needs to be waited before the data frame is transmitted, and reduce signaling overheads. In addition, the first MLD sends the unicast probe frame only after learning that the BSS configuration of the second link is updated. Compared with a manner in which the first MLD directly sends a probe request frame without learning whether there is an update, this can reduce the waiting time required before the data frame is transmitted in link processing.

Optionally, the first information is a sequence number of the BSS configuration, an access point configuration sequence number (AP-CSN), or a check beacon (check beacon) value that is in the second MLD and that identifies the second link. The second information is the sequence number of the BSS configuration, the access point configuration sequence number (AP-CSN), or the check beacon (check beacon) value that is stored (or recorded) in the first MLD and that identifies the second link. In this way, the first MLD compares whether the first information is consistent with the second information. If the first information is consistent with the second information, it indicates that the BSS configuration of the second link is not updated. If the first information is inconsistent with the second information, it indicates that the BSS configuration of the second link is updated. This helps the first MLD transmit the data frame on the second link in time.

That is, the first information is a sequence number of the current BSS configuration, an AP-CSN, or a check beacon value of the second link. The second information is a sequence number of the BSS configuration, an AP-CSN, or a check beacon value that is of the second link and that is previously obtained by the first MLD. Therefore, if the current BSS configuration of the second link is not updated compared with the BSS configuration of the second link that is previously obtained by the first MLD, the first information is equal to the second information. If the current BSS configuration of the second link is updated, the first information is not equal to or greater than the second information.

Optionally, the second information is obtained from a beacon (beacon) frame or a multi-link probe response frame of the first link when the first MLD performs channel sounding, or is obtained from a multi-link association response frame of the first link when the first MLD performs link association. That is, the beacon (beacon) frame, the multi-link probe response frame, or the multi-link association response frame of the first link further carries other information such as the link status and channel utilization of the second link.

Optionally, the beacon frame, the multi-link probe response frame, or the multi-link association response frame of the first link may carry information about a plurality of links or all links. In addition to the second information (for example, the AP-CSN or the check beacon value), information about each link further includes but is not limited to one or more of the following: a link status and channel utilization. Therefore, when the first MLD performs link switching or link status transition, the first MLD can select, based on the information, a switched-to link or a link whose status is transited.

In an optional implementation, the first information of the second link is carried in a link switching response message, a cross-link information report message, a medium access control frame, a response frame for negotiating a mapping relationship between a traffic identifier and a link, a beacon frame, a control field of the data frame, or a request frame for negotiating a mapping relationship between a traffic identifier and a link that is received on the first link. In an implementation, that the first MLD receives first information of the second link on the first link includes: The first MLD receives, on the first link, the link switching response message, the cross-link information report message, the medium access control frame, or the response frame for negotiating the mapping relationship between the traffic identifier and the link. The first information of the second link is carried in the link switching response message, the cross-link information report message, the medium access control frame, or the response frame for negotiating the mapping relationship between the traffic identifier and the link.

Optionally, the first MLD may first send a link switching request message, a cross-link information report request message, or the request frame for negotiating the mapping relationship between the traffic identifier and the link, so that the second MLD returns the first information of the second link through the foregoing response message. It can be learned that, in this implementation, the first MLD may actively request the first information of the switched-to link, to learn whether the BSS configuration of the second link is updated. This helps avoid, after switching or status transition, a problem that the data frame is transmitted only after the beacon frame is received, and reduces the waiting time required before the data frame is transmitted on the switched-to link or the link whose status is transited.

The first MLD sends the request frame for negotiating the mapping relationship between the traffic identifier and the link when the first MLD needs to change the mapping relationship between the link and the traffic identifier, so that link statuses of some links need to be transited from a disable/doze state to an enable/awake state. Correspondingly, the response frame for negotiating the mapping relationship between the traffic identifier and the link returned by the second MLD is further used for indicating whether the second MLD accepts a mapping configuration request between the traffic identifier and the link. If the second MLD accepts the mapping configuration request, the response frame for negotiating the mapping relationship between the traffic identifier and the link includes the first information of the second link. If the second MLD does not accept the mapping configuration request, the response frame for negotiating the mapping relationship between the traffic identifier and the link does not include the first information of the second link.

In another optional implementation, when the second MLD needs to change the mapping relationship between the link and the traffic identifier, the second MLD further needs to transit link statuses of some links from a disable/doze state to an enable/awake state. The second MLD may also send the request frame for negotiating the mapping relationship between the traffic identifier and the link to the first MLD. The request frame for negotiating the mapping relationship between the traffic identifier and the link may carry the first information of the second link. In this way, the first MLD may transit the link status based on the first information of the second link in the foregoing implementation, to reduce the waiting time required before the data frame is transmitted.

Correspondingly, the response frame for negotiating the mapping relationship between the traffic identifier and the link returned by the first MLD to the second MLD indicates whether the first MLD accepts a mapping configuration request between the traffic identifier and the link. If the first MLD accepts the mapping configuration request, the response frame for negotiating the mapping relationship between the traffic identifier and the link may carry information that is confirmed to be accepted. If the first MLD does not accept the mapping configuration request, the response frame for negotiating the mapping relationship between the traffic identifier and the link may agree on information that is rejected.

The first MLD or the second MLD may determine, based on a requirement, a link whose link status needs to be transited, to determine a quantity of links carried in the request frame for negotiating the mapping relationship between the traffic identifier and the link.

It can be learned that, in an optional implementation, the first information of the second link is carried in various messages, so that the first MLD or the second MLD can initiate a link switch request or a link status transition request in time in various scenarios. Therefore, a waiting time required for transmitting a data frame on a switched-to link or a link whose status is transited is further reduced.

According to a second aspect, this application further provides a link processing method. The link processing method in this aspect corresponds to the link processing method in the first aspect, and the link processing method in this aspect is described from a perspective of a second MLD.

In the method, a plurality of links between the second MLD and a first MLD include a first link and a second link. The second link is a link that is switched from the first link by the first MLD or a link whose link status is transited by the first MLD. The second MLD determines first information of the second link. The first information is used by the first MLD to determine whether a basic service set BSS configuration of the second link is updated. The second MLD sends the first information of the second link to the first MLD on the first link. Optionally, the second MLD may send the first information of the second link to the first MLD before the first MLD switches from the first link to the second link or before the link status of the second link is transited.

It can be learned that the method helps the first MLD determine, based on the first information, whether the BSS configuration of the second link is updated. Further, if the BSS configuration of the second link is not updated, the first MLD can directly transmit a data frame on the switched-to second link or the second link whose status is transited, and does not need to transmit the data frame until a beacon frame is received and a latest parameter of the BSS configuration is obtained on the switched-to second link or the second link whose status is transited. This reduces a waiting time required before the data frame is transmitted on the switched-to second link or the second link whose status is transited.

In an optional implementation, when the BSS configuration of the second link is not updated, the second MLD may receive an uplink data frame, a quality of service null (QoS NULL) frame, or a link status notification frame from the first MLD on the second link. The link status notification frame indicates that the second link is in an awake or enable state, so that the second MLD delivers a downlink data frame in time.

In an optional implementation, when the BSS configuration of the second link is updated, the second MLD receives second information from the first MLD on the second link, determines an updated parameter of the BSS configuration of the second link based on the second information, and sends the updated parameter of the BSS configuration of the second link to the first MLD on the first link.

Optionally, the first information is a sequence number of the BSS configuration, an access point configuration sequence number (AP-CSN), or a check beacon (check beacon) value that is in the second MLD and that identifies the second link. The second information is a sequence number of the BSS configuration, an access point configuration sequence number (AP-CSN), or a check beacon (check beacon) value that is stored in the first MLD and that identifies the second link. In this way, the first MLD may compare whether the first information is consistent with the second information. If the first information is consistent with the second information, it indicates that the BSS configuration of the second link is not updated. If the first information is inconsistent with the second information, it indicates that the BSS configuration of the second link is updated. This helps the first MLD transmit the data frame on the second link in time.

That is, the first information is an identifier of the current BSS configuration of the second link. The second information is an identifier of the BSS configuration of the second link that is previously obtained by the first MLD. Therefore, if the recently updated or current BSS configuration of the second link is not updated compared with the BSS configuration of the second link that is previously obtained by the first MLD, the first information is equal to the second information. If the recently updated or current BSS configuration of the second link is updated, the first information is not equal to or greater than the second information.

In an optional implementation, the second information of the second link is carried in a unicast probe request frame that is received on the second link. The updated parameter of the BSS configuration of the second link is carried, for sending, in a probe response frame on the second link. The probe response frame is sent based on the unicast probe request frame. That is, that the second MLD receives second information on the second link includes: The second MLD receives the unicast probe request frame on the second link. The unicast probe request frame includes the second information of the second link. The second MLD sends the probe response frame on the second link. The probe response frame includes the updated parameter of the BSS configuration of the second link. The updated parameter of the BSS configuration of the second link is obtained by the second MLD based on the second information.

Optionally, the second information that is of the second link and that is sent to the second MLD is obtained by the first MLD from a beacon (beacon) frame, a multi-link probe response frame, or a multi-link association response frame of the first link when the first MLD performs channel sounding or link association. In an implementation, the second MLD sends the beacon (beacon) frame, the multi-link probe response frame, or the multi-link association response frame of the first link on the first link. The beacon frame, the multi-link probe response frame, or the multi-link association response frame includes the second information of the second link. This helps the first MLD report the second information to the second MLD on the second link, to obtain the updated parameter of the BSS configuration of the second link.

Optionally, the beacon (beacon) frame, the multi-link probe response frame, or the multi-link association response frame of the first link further carries information such as the link status and channel utilization of the second link.

In an optional implementation, the first information of the second link is sent by the second MLD to the first MLD through a link switching response message, a cross-link information report message, a medium access control frame, a response frame for negotiating a mapping relationship between a traffic identifier and a link, a beacon frame, a control field of the data frame, or a request frame for negotiating a mapping relationship between a traffic identifier and a link that is on the first link. That is, that the second MLD sends the first information of the second link on the first link includes: The second MLD sends the link switching response message, the cross-link information report message, the medium access control frame, the response frame for negotiating the mapping relationship between the traffic identifier and the link, the beacon frame, the control field of the data frame, or the request frame for negotiating the mapping relationship between the traffic identifier and the link on the first link. The first information of the second link is carried in the link switching response message, the cross-link information report message, the medium access control frame, the response frame for negotiating the mapping relationship between the traffic identifier and the link, the beacon frame, the control field of the data frame, or the request frame for negotiating the mapping relationship between the traffic identifier and the link.

Optionally, the second MLD may first receive a link switching request message, a cross-link information report request message, or the request frame for negotiating the mapping relationship between the traffic identifier and the link from the first MLD on the first link, and then return the foregoing message. It can be learned that, in this implementation, the first MLD may actively request the first information of the switched-to link, to learn whether the BSS configuration of the second link is updated. This helps avoid, after switching or status transition, a problem that the data frame is transmitted only after the beacon frame is received, and reduces a waiting time required before the data frame is transmitted on the switched-to link or the link whose status is transited.

The request frame for negotiating the mapping relationship between the traffic identifier and the link from the first MLD is sent when the first MLD needs to change the mapping relationship between the link and the traffic identifier, so that link statuses of some links need to be transited from a disable/doze state to an enable/awake state. Correspondingly, the response frame for negotiating the mapping relationship between the traffic identifier and the link returned by the second MLD is further used for indicating whether the second MLD accepts a mapping configuration request between the traffic identifier and the link. Optionally, if the second MLD accepts the mapping configuration request, the response frame for negotiating the mapping relationship between the traffic identifier and the link includes the first information of the second link. If the second MLD does not accept the mapping configuration request, the response frame for negotiating the mapping relationship between the traffic identifier and the link does not include the first information of the second link.

In another optional implementation, when the second MLD needs to change the mapping relationship between the link and the traffic identifier, the second MLD further needs to transit link statuses of some links from a disable/doze state to an enable/awake state. The second MLD may also send the request frame for negotiating the mapping relationship between the traffic identifier and the link to the first MLD. The request frame for negotiating the mapping relationship between the traffic identifier and the link may carry the first information of the second link. In this way, the first MLD may transit the link status based on the first information of the second link in the foregoing implementation, to reduce a waiting time required before the data frame is transmitted.

Correspondingly, the response frame for negotiating the mapping relationship between the traffic identifier and the link received by the second MLD indicates whether the first MLD accepts a mapping configuration request between the traffic identifier and the link. Optionally, if the first MLD accepts the mapping configuration request, the response frame for negotiating the mapping relationship between the traffic identifier and the link may carry information that is confirmed to be accepted. If the first MLD does not accept the mapping configuration request, the response frame for negotiating the mapping relationship between the traffic identifier and the link may agree on information that is rejected.

In the foregoing two implementations, the first MLD or the second MLD may determine, based on a link whose link status needs to be transited, a quantity of links carried in the request frame for negotiating the mapping relationship between the traffic identifier and the link.

It can be learned that, in an optional implementation, the first information of the second link is carried in various messages, so that the first MLD or the second MLD can initiate a link switch request or a link status transition request in time in various scenarios. Therefore, a waiting time required for transmitting a data frame on a switched-to link or a link whose status is transited is further reduced.

According to a third aspect, this application further provides a link processing method. A difference between the method and the link processing method according to the first aspect lies in that, in this aspect, a second MLD determines whether a BSS configuration of a switched-to second link or the second link whose status is transited is updated. Further, on a first link, an updated parameter of the BSS configuration of the second link can be sent to a first MLD, or the first MLD can be notified that the BSS configuration of the second link is not updated. In this way, the first MLD can directly transmit a data frame on the switched-to second link or the second link whose status is transited, and does not need to transmit the data frame until a beacon frame is further received and a latest parameter of the BSS configuration is obtained on the switched-to second link or the second link whose status is transited. This reduces a waiting time required before the data frame is transmitted on the switched-to second link or the second link whose status is transited.

In addition, if a data frame on the first link needs to be switched to the second link, in the method, before switching from the first link to the second link, the first MLD can learn that the BSS configuration of the second link is not updated or learn the updated parameter of the BSS configuration of the second link. In this way, the data frame can be directly transmitted on the switched-to second link, and does not need to be transmitted until a beacon frame is received after switching. This helps shorten impact duration of a link switching process on data frame transmission. If a data frame on the first link needs to be offloaded to the second link, in the method, before a status of the second link is transited, the first MLD can learn that the BSS configuration of the second link is not updated or learn the updated parameter of the BSS configuration of the second link. Therefore, the data frame can be directly transmitted on the second link whose status is transited, and does not need to be transmitted until a beacon frame is received after status transition. This shortens duration required for data frame offloading transmission.

The link processing method in this aspect includes: The first MLD sends second information of the second link on the first link. The second information is used by the second MLD to determine whether the BSS configuration of the second link is updated. The first MLD receives third information on the first link. The third information is determined by the second MLD based on the second information. The third information indicates that the BSS configuration of the second link is not updated or the updated parameter of the BSS configuration of the second link. In this way, the first MLD may directly transmit the data frame on the second link based on the third information. It can be learned that the first MLD can directly transmit the data frame on the switched-to second link or the second link whose status is transited. This reduces the waiting time required before the data frame is transmitted on the switched-to second link or the second link whose status is transited.

When the BSS configuration of the second link is updated, the third information includes the updated parameter of the BSS configuration of the second link. When the BSS configuration of the second link is not updated, the third information may indicate that the BSS configuration of the second link is not updated.

The data frame may be an uplink data frame or a quality of service null (QoS NULL) frame, to notify the second MLD that the second link is in an awake/enable state. Optionally, the first MLD may further transmit a link status notification frame on the second link. The link status notification frame indicates that the second link is in the awake/enable state, so that the second MLD can send a downlink data frame on the second link in time.

The second information is a sequence number of the BSS configuration, an access point configuration sequence number (AP-CSN), or a check beacon (check beacon) value that is stored in the first MLD and that identifies the second link. The first information is a sequence number of the BSS configuration, an access point configuration sequence number (AP-CSN), or a check beacon (check beacon) value that is in the second MLD and that identifies the second link. In this way, the second MLD may compare whether the first information is consistent with the second information. If the first information is consistent with the second information, it indicates that the BSS configuration of the second link is not updated. If the first information is inconsistent with the second information, it indicates that the BSS configuration of the second link is updated. This helps the second MLD learn, based on the first information and the second information, whether the BSS configuration of the second link is updated.

That is, the first information is a sequence number of the current BSS configuration, an AP-CSN, or a check beacon value of the second link. The second information is a sequence number of the BSS configuration, an AP-CSN, or a check beacon value that is of the second link and that is previously obtained by the first MLD. Therefore, if the recently updated or current BSS configuration of the second link is not updated compared with the BSS configuration of the second link that is previously obtained by the first MLD, the first information is equal to the second information. If the recently updated or current BSS configuration of the second link is updated, the first information is not equal to or greater than the second information.

Optionally, the second information is obtained by the first MLD from a beacon (beacon) frame or a multi-link probe response frame of the first link when the first MLD performs channel sounding. Alternatively, the second information is obtained by the first MLD from a multi-link probe response frame of the first link when the first MLD performs link association.

Optionally, the beacon (beacon) frame, the multi-link probe response frame, or a multi-link association response frame of the first link may carry information about a plurality of links or all links. Information about each link includes the second information, and further includes but is not limited to one or more of the following: a link status, channel utilization, and the like. In this implementation, when the first MLD performs link switching or link status transition, the first MLD can select, based on the information, a switched-to link or a link whose status is transited.

In an optional implementation, the first MLD may send a link switching request message, a cross-link information report request message, or a request frame for negotiating a mapping relationship between a traffic identifier and a link on the first link, to notify the second MLD of the second information of the second link. That is, the second information of the second link is carried in the link switching request message, the cross-link information report request message, or the request frame for negotiating the mapping relationship between the traffic identifier and the link.

Correspondingly, the first MLD may receive a link switching response message, a cross-link information report message, a medium access control frame, or a response frame for negotiating a mapping relationship between a traffic identifier and a link on the first link, to obtain the third information of the second link. In an implementation, that the first multi-link device (MLD) receives third information on the first link includes: The first MLD receives, on the first link, the link switching response message, the cross-link information report message, the medium access control frame, or the response frame for negotiating the mapping relationship between the traffic identifier and the link. The third information of the second link is carried in the link switching response message, the cross-link information report message, the medium access control frame, or the response frame for negotiating the mapping relationship between the traffic identifier and the link.

The request frame for negotiating the mapping relationship between the traffic identifier and the link from the first MLD is sent when the first MLD needs to change the mapping relationship between the link and the traffic identifier, so that link statuses of some links need to be transited from a disable/doze state to an enable/awake state. Correspondingly, the response frame for negotiating the mapping relationship between the traffic identifier and the link returned by the second MLD indicates whether the second MLD accepts a mapping configuration request between the traffic identifier and the link. Optionally, if the second MLD accepts the mapping configuration request, the response frame for negotiating the mapping relationship between the traffic identifier and the link includes the third information of the second link. If the second MLD does not accept the mapping configuration request, the response frame for negotiating the mapping relationship between the traffic identifier and the link does not include the third information of the second link.

It can be learned that, in this implementation, the first MLD may actively report the second information of the switched-to link, to obtain the third information. This helps avoid, after link switch or status transition, a problem that the data frame is transmitted only after the beacon frame is received, and reduces a waiting time required before the data frame is transmitted on the switched-to link.

According to a fourth aspect, this application further provides a link processing method. The method corresponds to the link processing method in the third aspect, and this aspect is described from a perspective of a second MLD. According to this aspect, the second MLD determines whether a BSS configuration of a switched-to second link or the second link whose status is transited is updated. Further, on a first link, an updated parameter is sent to a first MLD, or the first MLD is notified that the BSS configuration of the second link is not updated. In this way, the first MLD can directly transmit a data frame on the switched-to second link or the second link whose status is transited, and does not need to transmit the data frame until a beacon frame is received and a latest parameter of the BSS configuration is obtained on the switched-to second link or the second link whose status is transited. This reduces a waiting time required before the data frame is transmitted on the switched-to second link or the second link whose status is transited.

In addition, if a data frame on the first link needs to be switched to the second link, in the method, before switching from the first link to the second link, the first MLD can learn that the BSS configuration of the second link is not updated or learn the updated parameter of the BSS configuration of the second link. In this way, the data frame can be directly transmitted on the switched-to second link, and does not need to be transmitted until a beacon frame is received after switching. This shortens impact duration of a link switching process on data frame transmission. If a data frame on the first link needs to be offloaded to the second link, in the method, before a status of the second link is transited, the first MLD can learn that the BSS configuration of the second link is not updated or learn the updated parameter of the BSS configuration of the second link. Therefore, the data frame can be directly transmitted on the second link whose status is transited, and does not need to be transmitted until a beacon frame is received after status transition. This shortens duration required for data frame offloading transmission.

The link processing method in this aspect includes: The second MLD receives second information of the second link on the first link. The second information is used by the second MLD to determine whether the BSS configuration of the second link is updated. The second MLD sends third information on the first link. The third information is determined by the second MLD based on the second information. The third information indicates that the BSS configuration of the second link is not updated or the updated parameter of the BSS configuration of the second link.

When the BSS configuration of the second link is updated, the third information includes the updated parameter of the BSS configuration of the second link. When the BSS configuration of the second link is not updated, the third information indicates that the BSS configuration of the second link is not updated.

It can be learned that, because the second MLD may notify the first MLD on the first link whether the BSS configuration of the second link is updated or the updated parameter of the BSS configuration of the second link, the first MLD can directly transmit the data frame on the switched-to second link or the second link whose status is transited without waiting for a beacon frame to be received. This reduces the waiting time required before the data frame is transmitted on the switched-to second link or the second link whose status is transited.

Optionally, after sending the third information on the first link, the second MLD may further receive a data frame on the second link. The data frame includes an uplink data frame, a quality of service null (QoS NULL) frame, or a link status notification frame. The link status notification frame indicates that the second link is in an awake/enable state, so that the second MLD sends a downlink data frame on the second link in time.

The second information is a sequence number of the BSS configuration, an access point configuration sequence number (AP-CSN), or a check beacon (check beacon) value that is stored in the first MLD and that identifies the second link. The first information is a sequence number of the BSS configuration, an access point configuration sequence number (AP-CSN), or a check beacon (check beacon) value that is in the second MLD and that identifies the second link. In this way, the second MLD may compare whether the first information is consistent with the second information. If the first information is consistent with the second information, it indicates that the BSS configuration of the second link is not updated. If the first information is inconsistent with the second information, it indicates that the BSS configuration of the second link is updated. This helps the second MLD learn, based on the first information and the second information, whether the BSS configuration of the second link is updated.

That is, the first information is a sequence number of the current BSS configuration, an AP-CSN, or a check beacon value of the second link. The second information is a sequence number of the BSS configuration, an AP-CSN, or a check beacon value that is of the second link and that is previously obtained by the first MLD. Therefore, if the recently updated or current BSS configuration of the second link is not updated compared with the BSS configuration of the second link that is previously obtained by the first MLD, the first information is equal to the second information. If the recently updated or current BSS configuration of the second link is updated, the first information is not equal to or greater than the second information.

Optionally, the second information is obtained from a beacon (beacon) frame or a multi-link probe response frame of the first link when the first MLD performs channel sounding. Alternatively, the second information is obtained from the multi-link probe response frame of the first link when the first MLD performs link association.

Optionally, the beacon (beacon) frame, the multi-link probe response frame, or a multi-link association response frame of the first link may carry information about a plurality of links or all links. Information about each link includes the second information, and further includes but is not limited to one or more of the following: a link status, channel utilization, and the like. In this implementation, when the first MLD performs link switching or link status transition, the first MLD can select, based on the information, a switched-to link or a link whose status is transited.

In an optional implementation, the second MLD may receive a link switching request message, a cross-link information report request message, or a request frame for negotiating a mapping relationship between a traffic identifier and a link from the first MLD on the first link, to obtain the second information of the second link. That is, the second information of the second link is carried in the link switching request message, the cross-link information report request message, or the request frame for negotiating the mapping relationship between the traffic identifier and the link.

Correspondingly, the second MLD may send a link switching response message, a cross-link information report message, a medium access control frame, or a response frame for negotiating a mapping relationship between a traffic identifier and a link on the first link, to send the third information of the second link to the first MLD. That is, the third information of the second link is carried in the link switching response message, the cross-link information report message, the medium access control frame, or the response frame for negotiating the mapping relationship between the traffic identifier and the link.

The request frame for negotiating the mapping relationship between the traffic identifier and the link from the first MLD is sent when the first MLD needs to change the mapping relationship between the link and the traffic identifier, so that link statuses of some links need to be transited from a disable/doze state to an enable/awake state. Correspondingly, the response frame for negotiating the mapping relationship between the traffic identifier and the link returned by the second MLD indicates whether the second MLD accepts a mapping configuration request between the traffic identifier and the link. Optionally, if the second MLD accepts the mapping configuration request, the response frame for negotiating the mapping relationship between the traffic identifier and the link includes the third information of the second link. If the second MLD does not accept the mapping configuration request, the response frame for negotiating the mapping relationship between the traffic identifier and the link does not include the third information of the second link.

It can be learned that, in this implementation, the first MLD may actively report the second information of the switched-to link or the link whose status is transited, to obtain the third information.

It can be learned that, in the foregoing implementations, the second information and the third information of the second link may be carried in various messages, so that the first MLD or the second MLD can initiate a link switch request or a link status transition request in time in various scenarios. Therefore, a waiting time required before a data frame is transmitted on a switched-to link or a link whose status is transited is further reduced.

According to a fifth aspect, this application provides a multi-link device. The multi-link device may include a plurality of function modules, configured to correspondingly perform the method provided in the first aspect or the method provided in any one of the possible implementations of the first aspect.

According to a sixth aspect, this application provides a multi-link device. The multi-link device may include a plurality of function modules, configured to correspondingly perform the method provided in the second aspect or the method provided in any one of the possible implementations of the second aspect.

According to a seventh aspect, this application provides a multi-link device. The multi-link device may include a plurality of function modules, configured to correspondingly perform the method provided in the third aspect or the method provided in any one of the possible implementations of the third aspect.

According to an eighth aspect, this application provides a multi-link device. The multi-link device may include a plurality of function modules, configured to correspondingly perform the method provided in the fourth aspect or the method provided in any one of the possible implementations of the fourth aspect.

According to a ninth aspect, this application provides a multi-link device, configured to perform the link processing method described in the first aspect. The multi-link device may include a memory, and a processor and a transceiver that are coupled to the memory. The transceiver is configured to communicate with another communications device (such as a multi-link device). The memory is configured to store implementation code of the link processing method described in the first aspect. The processor is configured to execute program code stored in the memory, that is, perform the method provided in the first aspect or the method provided in any one of the possible implementations of the first aspect.

According to a tenth aspect, this application provides a multi-link device, configured to perform the link processing method described in the second aspect. The multi-link device may include a memory, and a processor and a transceiver that are coupled to the memory. The transceiver is configured to communicate with another communications device (such as a multi-link device). The memory is configured to store implementation code of the link processing method described in the second aspect. The processor is configured to execute program code stored in the memory, that is, perform the method provided in the second aspect or the method provided in any one of the possible implementations of the second aspect.

According to an eleventh aspect, this application provides a multi-link device, configured to perform the link processing method described in the third aspect. The multi-link device may include a memory, and a processor and a transceiver that are coupled to the memory. The transceiver is configured to communicate with another communications device (such as a multi-link device). The memory is configured to store implementation code of the link processing method described in the third aspect. The processor is configured to execute program code stored in the memory, that is, perform the method provided in the third aspect or the method provided in any one of the possible implementations of the third aspect.

According to a twelfth aspect, this application provides a multi-link device, configured to perform the link processing method described in the fourth aspect. The multi-link device may include a memory, and a processor and a transceiver that are coupled to the memory. The transceiver is configured to communicate with another communications device (such as a multi-link device). The memory is configured to store implementation code of the link processing method described in the fourth aspect. The processor is configured to execute program code stored in the memory, that is, perform the method provided in the fourth aspect or the method provided in any one of the possible implementations of the fourth aspect.

According to a thirteenth aspect, this application provides a chip system. The chip system may include a processor, and one or more interfaces coupled to the processor. The processor may be configured to invoke, from a memory, an implementation program of the link processing method provided in the first aspect or the link processing method provided in any one of the possible implementations of the first aspect, and execute instructions included in the program. The interface may be configured to output a link processing result of the processor.

According to a fourteenth aspect, this application provides a chip system. The chip system may include a processor, and one or more interfaces coupled to the processor. The processor may be configured to invoke, from a memory, an implementation program of the link processing method provided in the second aspect or the link processing method provided in any one of the possible implementations of the second aspect, and execute instructions included in the program. The interface may be configured to output a link processing result of the processor.

According to a fifteenth aspect, this application provides a chip system. The chip system may include a processor, and one or more interfaces coupled to the processor. The processor may be configured to invoke, from a memory, an implementation program of the link processing method provided in the third aspect or the link processing method provided in any one of the possible implementations of the third aspect, and execute instructions included in the program. The interface may be configured to output a link processing result of the processor.

According to a sixteenth aspect, this application provides a chip system. The chip system may include a processor, and one or more interfaces coupled to the processor. The processor may be configured to invoke, from a memory, an implementation program of the link processing method provided in the fourth aspect or the link processing method provided in any one of the possible implementations of the fourth aspect, and execute instructions included in the program. The interface may be configured to output a link processing result of the processor.

According to a seventeenth aspect, this application provides a communications system, including a first multi-link device and a second multi-link device.

The first multi-link device may be configured to perform the link processing method provided in the first aspect or the link processing method provided in any one of the possible implementations of the first aspect. The second multi-link device may be configured to perform the link processing method provided in the second aspect or the link processing method provided in any one of the possible implementations of the second aspect.

According to an eighteenth aspect, this application provides a communications system, including a first multi-link device and a second multi-link device.

The first multi-link device may be configured to perform the link processing method provided in the third aspect or the link processing method provided in any one of the possible implementations of the third aspect. The second multi-link device may be configured to perform the link processing method provided in the fourth aspect or the link processing method provided in any one of the possible implementations of the fourth aspect.

According to a nineteenth aspect, a computer-readable storage medium is provided. The readable storage medium stores program code for implementing the link processing method provided in the first aspect or the link processing method provided in any one of the possible implementations of the first aspect. The program code includes execution instructions for running the link processing method provided in the first aspect or the link processing method provided in any one of the possible implementations of the first aspect.

According to a twentieth aspect, a computer-readable storage medium is provided. The readable storage medium stores program code for implementing the link processing method provided in the second aspect or the link processing method provided in any one of the possible implementations of the second aspect. The program code includes execution instructions for running the link processing method provided in the second aspect or the link processing method provided in any one of the possible implementations of the second aspect.

According to a twenty-first aspect, a computer-readable storage medium is provided. The readable storage medium stores program code for implementing the link processing method provided in the third aspect or the link processing method provided in any one of the possible implementations of the third aspect. The program code includes execution instructions for running the link processing method provided in the third aspect or the link processing method provided in any one of the possible implementations of the third aspect.

According to a twenty-second aspect, a computer-readable storage medium is provided. The readable storage medium stores program code for implementing the link processing method provided in the fourth aspect or the link processing method provided in any one of the possible implementations of the fourth aspect. The program code includes execution instructions for running the link processing method provided in the fourth aspect or the link processing method provided in any one of the possible implementations of the fourth aspect.

According to a twenty-third aspect, this application further provides a computer program product including a computer program. When the computer program product runs on a computer, the computer is enabled to perform the link processing method according to the first aspect or the link processing method according to any one of the possible implementations of the first aspect.

According to a twenty-fourth aspect, this application further provides a computer program product including a computer program. When the computer program product runs on a computer, the computer is enabled to perform the link processing method according to the second aspect or the link processing method according to any one of the possible implementations of the second aspect.

According to a twenty-fifth aspect, this application further provides a computer program product including a computer program. When the computer program product runs on a computer, the computer is enabled to perform the link processing method according to the third aspect or the link processing method according to any one of the possible implementations of the third aspect.

According to a twenty-sixth aspect, this application further provides a computer program product including a computer program. When the computer program product runs on a computer, the computer is enabled to perform the link processing method according to the fourth aspect or the link processing method according to any one of the possible implementations of the fourth aspect.

### BRIEF DESCRIPTION OF DRAWINGS

FIG. 1A is a schematic diagram of a structure of a communications system according to an embodiment of this application;
FIG. 1B is a schematic diagram of a structure of another communications system according to an embodiment of this application;
FIG. 2 is a schematic diagram of a link association method according to an embodiment of this application;
FIG. 3 is a schematic diagram of a link switch method according to an embodiment of this application;
FIG. 4 is a schematic diagram of a link status transition method according to an embodiment of this application;
FIG. 5A is a schematic diagram of a link processing method according to an embodiment of this application;
FIG. 5B is a schematic diagram of another link processing method according to an embodiment of this application;
FIG. 5C is a schematic diagram of still another link processing method according to an embodiment of this application;
FIG. 6 is a schematic diagram of a structure of a beacon frame according to an embodiment of this application;
FIG. 7 is a schematic diagram of a structure of a multi-link probe response frame according to an embodiment of this application;
FIG. 8 is a schematic diagram of a structure of a link switch element according to an embodiment of this application;
FIG. 9 is a schematic diagram of a structure of a link status transition element according to an embodiment of this application;
FIG. 10 is a schematic diagram of a structure of a multi-link device according to an embodiment of this application;
FIG. 11 is a schematic diagram of a structure of another multi-link device according to an embodiment of this application; and
FIG. 12 is a schematic diagram of a structure of a chip according to an embodiment of this application.

### DESCRIPTION OF EMBODIMENTS

The following describes the technical solutions in embodiments of this application with reference to the accompanying drawings.

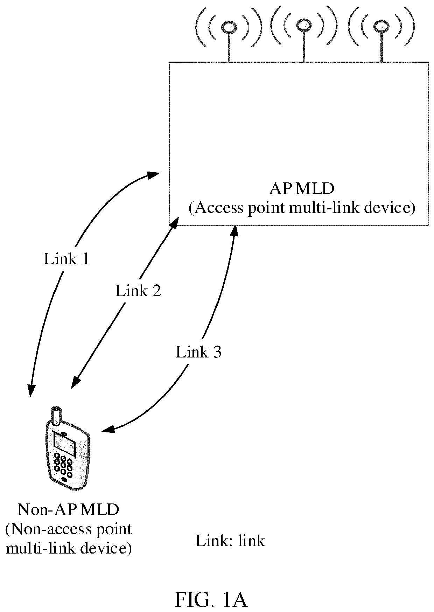

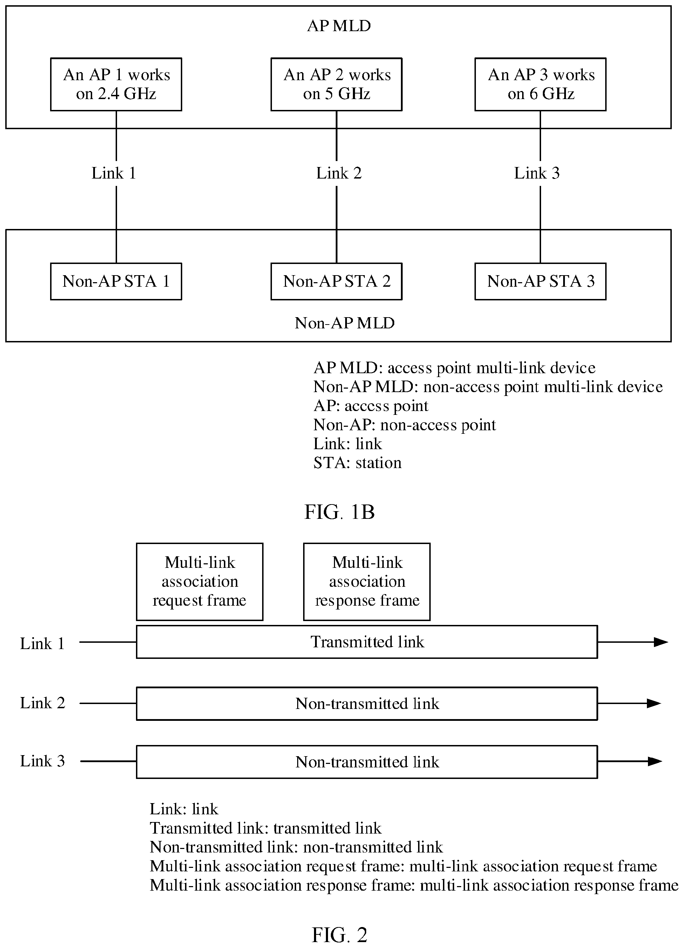

Embodiments of this application provide a link processing method based on a communications system shown in FIG. 1A and FIG. 1B. The method can implement fast transition between link statuses or fast switching between links. A communications system 100 shown in FIG. 1A and FIG. 1B includes at least two multi-link devices (multi-link device, MLD). For example, one is an access point (access point, AP) multi-link device, and the other is a non-access point (non-access point, non-AP) multi-link device.

In FIG. 1A, a single-radio non-AP MLD and a multi-radio AP MLD are used as examples. At any moment, the single-radio non-AP MLD may have only one link to communicate with the AP MLD, and other links are in a disable state. In FIG. 1B, a multi-radio non-AP MLD and a multi-radio AP MLD are used as an example. At any moment, the multi-radio non-AP MLD may have one or more links to communicate with the AP MLD. In FIG. 1A and FIG. 1B, for example, the non-AP MLD includes three STAs (for example, a STA 1, a STA 2, and a STA 3), and the AP MLD includes three APs (for example, an AP 1, an AP 2, and an AP 3). The STA 1 may be associated with the AP 1, and may communicate with the AP 1 through a link (link) 1; the STA 2 is associated with the AP 2, and may communicate with the AP 2 through a link 2; and the STA 3 is associated with the AP 3, and may communicate with the AP 3 through a link 3. In addition, related operations of the non-AP MLD and the AP MLD on the link 1 may be correspondingly performed by the STA 1 and the AP 1. For example, "the AP MLD sends first information on the link 1, and the non-AP MLD receives the first information on the link 1" may be "the AP 1 sends first information on the link 1, and the STA 1 receives the first information on the link 1. Correspondingly, related operations of the non-AP MLD and the AP MLD on the link 2 may be correspondingly performed by the STA 2 and the AP 2. Related operations of the non-AP MLD and the AP MLD on the link 3 may be correspondingly performed by the STA 3 and the AP 3. For ease of description, in this embodiment of this application, an example in which a non-AP MLD and an AP MLD are separately used as execution bodies is used for description.

### 1. Communications system

In this embodiment of this application, the communications system 100 may be a wireless local area network (Wireless local area network, WLAN), a cellular network, or another wireless communications system that supports parallel transmission on a plurality of links. In this embodiment of this application, a network in which the IEEE 802.11 is deployed is mainly used as an example for description. Various aspects in this application may be extended to another network that adopts various standards or protocols, for example, BLUETOOTH (Bluetooth), a high-performance radio LAN (high performance radio LAN, HIPERLAN) (a wireless standard similar to the IEEE 802.1 1 standard, mainly used in Europe), a wide area network (WAN), a wireless local area network (wireless local area network, WLAN), a personal area network (personal area network, PAN), or another network now known or developed in the future. Therefore, the various aspects provided in this application may be applicable to any suitable wireless network regardless of a coverage area and a wireless access protocol used.

### 2. Multi-link device

The multi-link device is a device that can work on a plurality of frequency bands or a plurality of channel. For example, a frequency band or a channel on which the multi-link device can work may include but are not limited to all or a part of sub 1 GHz, 2.4 GHz, 5 GHz, 6 GHz, and a high frequency 60 GHz. The AP MLD and the non-AP MLD in FIG. 1B may respectively work on 2.4 GHz, 5 GHz, and 6 GHz. The multichannel may be channel division performed based on any frequency band, for example, a 160 MHz channel, an 80 MHz channel, a 40 MHz channel, or a 20 MHz channel at a 5 GHz frequency band. The multi-link device may implement wireless communication in compliance with the 802.11 series protocols, for example, in compliance with an extremely high throughput (Extremely High Throughput, EHT) station, or in compliance with an 802.11be-based station or a station that is compatible with 802.11be, to implement communication with another device. The another device may be a multi-link device, or may not be a multi-link device.

The multi-link device includes one or more affiliated stations STAs (affiliated STA). The affiliated STA is a logical station and may work on one link, or a plurality of logical stations work on a same link. The affiliated station may be an access point (Access Point, AP) or a non-access point station (non-Access Point Station, non-AP STA). For ease of description, in this application, a multi-link device whose affiliated station is an AP may be referred to as a multi-link AP, a multi-link AP device, or an AP multi-link device (AP multi-link device) (for example, the AP MLD in FIG. 1A and FIG. 1B). A multi-link device whose affiliated station is a non-AP STA may be referred to as a multi-link STA, a multi-link STA device, a STA multi-link device (STA multi-link device), or a non-AP MLD (for example, the non-AP MLD in FIG. 1A and FIG. 1B). For ease of description, "a multi-link device includes an affiliated STA" is also briefly described as "a multi-link device includes a STA" (as shown in FIG. 1A and FIG. 1B) or "a multi-link device includes an AP" in this embodiment of this application.

In this embodiment of this application, a multi-link device (for example, the AP MLD and the non-AP MLD in FIG. 1A and FIG. 1B) is an apparatus having a wireless communications function. The apparatus may be a device of an entire system, or may be a chip, a processing system, or the like installed in a device of an entire system. The device on which the chip or the processing system is installed may implement a method and a function in this embodiment of this application, under control of the chip or the processing system. For example, the multi-link device may be a multi-link device with a single antenna (or a single radio frequency module), or may be a multi-link device with a plurality of antennas (or a plurality of radio frequency modules). A quantity of antennas included in the multi-link device is not limited in this embodiment of this application.

In this embodiment of this application, the non-AP MLD (for example, the non-AP MLD in FIG. 1A and FIG. 1B) has a wireless transceiver function, may support the 802.11 series protocols, and communicates with an AP MLD, another non-AP MLD, or a single-link device. For example, the non-AP MLD may be any user communications device that allows a user to communicate with an AP and further communicate with a WLAN, including but not limited to, user equipment that can be connected to a network, such as a tablet computer, a desktop computer, a laptop computer, a notebook computer, an ultra-mobile personal computer (Ultra-mobile Personal Computer, UMPC), a handheld computer, a netbook, a personal digital assistant (Personal Digital Assistant, PDA), or a mobile phone, or an internet of things node in the internet of things, or a vehicle-mounted communications apparatus in the internet of vehicles, or the like. Optionally, the non-AP MLD may alternatively be a chip and a processing system in the foregoing terminals.

In this embodiment of this application, the AP MLD (for example, the AP MLD in FIG. 1A and FIG. 1B) is an apparatus that provides a service for the non-AP MLD, and may support the 802.11 series protocols. For example, the AP MLD may be a communications entity such as a communications server, a router, a switch, or a bridge, or the AP MLD may include a macro base station, a micro base station, a relay station, and the like in various forms. Certainly, the AP MLD may alternatively be a chip and a processing system in the devices in various forms. In this way, the method and the function in this embodiment of this application are implemented.

In addition, the multi-link device may support high-rate and low-latency transmission. With continuous evolution of application scenarios of a wireless local area network, the multi-link device may be further applied to more scenarios, for example, a sensor node (for example, a smart water meter, a smart electricity meter, and a smart air detection node) in a smart city, a smart device (for example, a smart camera, a projector, a display screen, a television, a stereo, a refrigerator, and a washing machine) in a smart home, a node in an internet of things, an entertainment terminal (for example, a wearable device such as an AR and a VR), a smart device (for example, a printer or a projector) in a smart office, an internet of vehicles device in an internet of vehicles, and some infrastructures (for example, a vending machine, a self-service navigation console in a supermarket, a self-service cash register, and a self-service ordering machine) in a daily life scenario. In this embodiment of this application, specific forms of the AP MLD and the non-AP MLD are not specially limited, and are merely examples for description herein. The 802.11 protocol may be a protocol that supports 802.11be or is compatible with 802. 11be.

### 3. Link identifier

In this embodiment of this application, the link identifier represents a link corresponding to a BSS that works on a channel. Optionally, if there are a plurality of basic service sets on one channel, a plurality of link identifiers may be used to represent a link corresponding to each basic service set (basic service set, BSS).

A link sometimes also represents an AP or a STA working on the link. For ease of description, in some parts of this specification, a link may be used to represent a STA on the link. Correspondingly, an operation of a multi-link device on one link may also be referred to as an operation of an AP or a STA on the link. That the non-AP MLD receives the first information of the link 2 from the link 1 may also be referred to as that the STA 1 in the non-AP MLD receives the first information of the link 2 from the link 1. Correspondingly, the AP MLD may be that the AP 1 in the AP MLD sends the first information of the link 2 on the link 1.

The AP MLD and the non-AP MLD may determine association relationships between a plurality of STAs of the non-AP MLD and a plurality of APs of the AP MLD through association operations. For example, in FIG. 2, the non-AP MLD sends a multi-link association request (multi-link association request) frame on the link 1. In addition to carrying information such as a capability of the STA 1, the multi-link association request frame may further carry information about the STA 2 and information about the STA 3. The link 1 may be referred to as a transmitted link (Transmitted Link). The link 2 and the link 3 are referred to as non-transmitted links (Non-transmitted Link). Correspondingly, the AP MLD returns a multi-link association response (multi-link association response) frame on the link 1. In addition to carrying information such as a basic service set identifier (basic service set identifier, BSSID) of the AP 1, the multi-link association response frame may further carry information about the AP 2 and information about the AP 3. In this way, the STA 1, the STA 2, and the STA 3 of the non-AP MLD may separately establish associations with the AP 1, the AP 2, and the AP 3 of the AP MLD based on the multi-link association response frame. Therefore, corresponding association relationships shown in FIG. 1A and FIG. 1B are obtained: (the AP 1, the STA 1), (the AP 2, the STA 2), and (the AP 3, the STA 3). Optionally, FIG. 1A and FIG. 1B use these correspondences as an example. The AP MLD may further establish other corresponding association relationships by changing a sequence of carried information about the AP, for example, (the AP 1, the STA 2), (the AP 2, the STA 1), and (the AP 3, the STA 3).

In addition, in FIG. 1A, FIG. 1B, FIG. 2, and other subsequent schematic diagrams, the communications system 100 is used as an example for description. For example, the communications system 100 includes an AP MLD and a non-AP MLD. This is intended to describe the technical solutions in embodiments of this application more clearly, and does not constitute a limitation on the technical solutions provided in embodiments of this application. A person of ordinary skill in the art may learn that, with evolution of a communications system and emergence of a new service scenario, embodiments of this application are also applicable to a similar technical problem. For example, the communications system including the multi-link device MLD may alternatively be a communications system including an AP MLD 1 and an AP MLD 2, or a communications system including a non-AP MLD 1 and a non-AP MLD 2. For another example, the AP MLD includes one or more APs (an AP 1, an AP 2, ..., and an AP N). The non-AP MLD includes one or more STAs (a STA 1, a STA 2, ..., and a STA N). There are a plurality of links (a link 1, a link 2, ..., and a link N) between the AP MLD and the non-AP. A communications link between the AP 1 and the STA 1 is the link 1, a communications link between the AP 2 and the STA 2 is the link 2, a communication link between the AP N and the STA N is the link N, and the like.

### 4. Link switch, link status transition, and problems to be solved

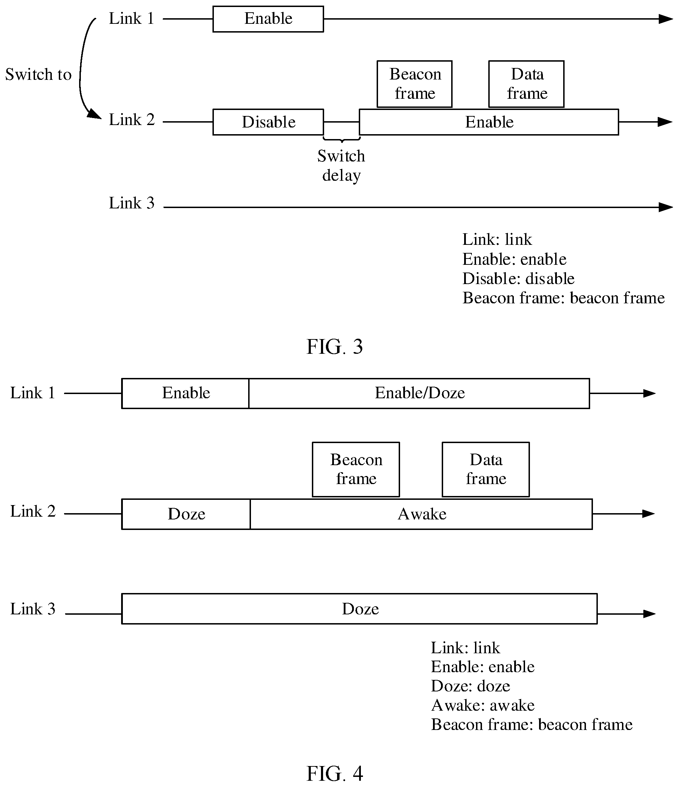

A single-radio multi-link device has a single radio frequency module. Although the single-radio multi-link device can work on different frequency bands or channels, the single-radio multi-link device can work only on one frequency band or channel at any moment. Therefore, when an RSSI (receive signal strength indicator, received signal strength indicator) of a link becomes poor due to movement of the link, the single-radio multi-link device can switch from one link to another, for example, from a link deployed on the 5 GHz frequency band to a link deployed on the 2.4 GHz frequency band. As shown in FIG. 3, it is assumed that the non-AP MLD is a single-radio multi-link device, and the link 1 is in an enable state. If a data frame needs to be transmitted on the link 2, the non-AP MLD needs to switch from the link 1 to the link 2. Correspondingly, the link 1 is transited from enable to disable, the link 2 is transited from disable to enable, and the link3 is always in disable. Because the single-radio multi-link device performs switch between different frequency bands or channels, a related working parameter of the radio frequency module needs to be configured. Therefore, there is a switch delay (switch delay) when the link 2 is transited from disable to enable. In addition, when the link 2 transmits the data frame, the STA 2 further needs to obtain a related parameter currently configured by the AP 2 for a BSS corresponding to the link 2. For example, a parameter that is configured by the AP 2 for the BSS corresponding to the link 2 and that is obtained by the STA 2 through the multi-link association response frame shown in FIG. 2 may be updated with a current parameter of the BSS configuration of the AP 2, and one or more of parameters shown in Table 1 are updated. Therefore, after the link 2 is transited from disable to enable, the non-AP MLD further needs to correctly receive a beacon (beacon) frame on the link 2. The beacon frame carries the BSS parameter currently configured by the AP 2 for the link 2, so that the data frame can be transmitted.

**Table 1 Part of parameters in the BSS configuration**

| Quiet element | Quiet element |
|---|---|
| BSS Load element | BSS load element |
| BSS Average Access Delay element | BSS average access delay element |
| BSS Available Access Capacity element | BSS available access capacity element |
| BSS AC Access Delay element | BSS access class access delay element |
| Time Advertisement element | Time advertisement element |
| beacon Timing element | Beacon timing element |
| AP-CSN element | AP configuration sequence number element |

For a multi-radio multi-link device, when a data volume is relatively small or there is no delay-sensitive service, to reduce energy consumption, a part of links may be in a doze (doze) or disable (disable) state. When the data volume is relatively large or there is a real-time service, the link in the doze (doze) or disable (disable) state is enabled again, so that the link is in an awake (awake) or enable (enable) state. For example, as shown in FIG. 4, it is assumed that the non-AP MLD 102 is a multi-radio multi-link device, the link 1 is in an enable state, and the link 2 and the link 3 are in a doze state. If a data frame needs to be transmitted on the link 2, the non-AP MLD needs to transit the link 2 from the doze state to the awake state. Because each radio frequency module in the multi-radio multi-link device does not need to reconfigure a related working parameter or the like, when the link 2 is transited from the doze state to the awake state, there is no switch delay (switch delay). Because the AP 2 may update a parameter of the BSS configuration when the STA 2 is in the doze state, after the STA 2 transits from the doze state to the awake state, the STA 2 needs to correctly receive a beacon (beacon) frame on the link 2. The beacon frame carries the current parameter configured by the AP 2 for the BSS corresponding to the link 2, so that the data frame can be transmitted.

It can be learned that, regardless of link status transition in the multi-radio multi-link device or link switch in the single-radio multi-link device, to transmit a data frame, a beacon (beacon) frame needs to be further received on a link whose status is transited or a switched-to link, and a current BSS configuration of a second link needs to be further obtained. This results in an excessively long waiting time required before the data frame is transmitted on the link whose status is transited or the switched-to link. That is, fast transition between link statuses or fast switching between links cannot be implemented.

To resolve the problem, this application provides a link processing method. In the link processing method, a first MLD receives first information of a second link on a first link. The first information is used by the first MLD to determine whether a BSS configuration of the second link is updated. In this way, when the BSS configuration of the second link is not updated, the first MLD may directly transmit a data frame on the second link, to implement fast transition between link statuses of the second link or fast switching from the first link to the second link.

This application further provides a link processing method. In the link processing method, a second MLD determines whether a BSS configuration of a switched-to second link or the second link whose status is transited is updated. Further, on a first link, an updated parameter is sent to a first MLD, or the first MLD is notified that the BSS configuration of the second link is not updated. In this way, the first MLD can directly transmit a data frame on the switched-to second link or the second link whose status is transited without waiting for a beacon frame to be received. This reduces a waiting time required before the data frame is transmitted on the switched-to second link or the second link whose status is transited.

That is, one link processing method is that the first MLD determines whether the BSS configuration of the second link is updated. The other link processing method is that the second MLD determines whether the BSS configuration that is of the second link and that is stored in the first MLD needs to be updated. The foregoing two link processing methods are separately described below in part 6 and part 7. Unless otherwise specified, the implementations described in embodiments of this application are applicable to a single-radio multi-link device, and are also applicable to a multi-radio multi-link device.

### 5. Related concepts in this application

To facilitate understanding of embodiments of this application, some concepts or nouns are first explained.

A first link is a link in an enable (enable) state in a plurality of links between the non-AP MLD and the AP MLD. A second link is a link in a disable (disable) state or a doze (doze) state in the plurality of links, and the second link is a link to which the non-AP MLD switches from the first link or a link whose link status needs to be transited.

For the single-radio non-AP MLD, the first link is a link in an enable state in the plurality of links. The second link is a switched-to link that is in a disable state in the plurality of links. For the multi-radio non-AP MLD, the first link is a link in an enable state, a link in an awake state, or an anchor (anchor) link in the plurality of links. The second link is a link in a disable state or a doze state in the plurality of links, and the status of the second link needs to be transited from a disable/doze state to an enable/awake state.

For the single-radio non-AP MLD, after the first link is switched to the second link, the first link is in a disable state, and the second link is in an enable state. For the multi-radio non-AP MLD, after the first link is switched to the second link, the second link is in an enable state, but a subsequent state of the first link is not limited. That is, the first link may be in a disable/doze/enable/awake state based on a situation. Optionally, for the multi-radio non-AP MLD, there may be a plurality of links whose statuses need to be transited. A processing method for each link is the same as the link status transition method for the second link. Optionally, first information and second information of the plurality of links whose statuses need to be transited may be carried in one message, or may be carried in a plurality of same or different messages.

First information of the second link is used by a first MLD to determine whether a basic service set BSS configuration of the second link is updated. Optionally, the first information is a sequence number of the BSS configuration, an access point configuration sequence number (AP-CSN), or a check beacon (check beacon) value that identifies a latest configuration of a second MLD and that is of the second link.

Second information of the second link is used by the second MLD to determine whether the basic service set BSS configuration of the second link is updated. The second information is a sequence number of the BSS configuration, an access point configuration sequence number (AP-CSN), or a check beacon (check beacon) value that is stored in the first MLD and that identifies the second link.

Optionally, in the link processing method described in part 6 below, second information of a second link may be specifically used by a second MLD to determine an updated parameter of a BSS configuration of the second link. In the link processing method described in part 2, the second information may be specifically used by the second MLD to determine whether the BSS configuration of the second link is updated and the updated parameter of the BSS configuration of the second link.

An updated parameter of the BSS configuration of the second link described in this specification refers to a parameter that needs to be updated in the BSS configuration of the second link and that is stored in the first MLD compared with a current BSS configuration of the second link in the second MLD. Alternatively, an updated parameter of the BSS configuration of the second link is whether a parameter of the BBS configuration of the second link after the second link is in a disable/doze state is updated compared with a parameter of the BBS configuration of the second link before the second link is in the disable/doze state. Therefore, the first information of the second link may be used for assisting the first MLD in determining whether the basic service set BSS configuration of the second link is updated. For example, the first MLD determines, based on the first information and the second information, whether the basic service set BSS configuration of the second link is updated. The second information of the second link may be used for assisting the second MLD in determining whether the basic service set BSS configuration of the second link is updated. For example, the second MLD determines, based on the first information and the second information, whether the basic service set BSS configuration of the second link is updated.

In a method described in part 7 below, third information is determined by a second MLD based on second information of a second link, and is sent on a first link. The third information indicates that a BSS configuration of the second link is not updated or indicates an updated parameter of the BSS configuration of the second link. When the BSS configuration of the second link is not updated, the third information may indicate that the BSS configuration of the second link is not updated. When the BSS configuration of the second link is updated, the third information includes the updated parameter of the BSS configuration of the second link.

The BSS configuration indicates a parameter related to the BSS. A station on the link needs to be operated based on the parameter of the BSS configuration. The updated parameter of the BSS configuration may include but is not limited to one or more parameters shown in Table 1. The BSS configuration of the second link in the first MLD is obtained when the first MLD performs channel sounding or link association. Therefore, the BSS configuration of the second link in the first MLD may also be referred to as an initial BSS configuration of the second link in the first MLD or a BSS configuration of the second link that is stored in the first MLD. Correspondingly, the BSS configuration of the second link in the second MLD may be referred to as a current BSS configuration of the second link.

The link processing method in embodiments of this application may be applied to but is not limited to the communications systems shown in FIG. 1A to FIG. 4. For ease of description, an example in which the first MLD is a non-AP MLD and the second MLD is an AP MLD is used. In addition, for a first link and a second link included in a plurality of links between the AP MLD and the non-AP MLD, a link 1 and a link 2 may be separately used as an example. The link 2 is a switched-to link from the link 1 or a link whose status is transited. That is, the link 1 is in an enable state, and the link 2 is in a doze/disable state, and the link 2 needs to be transited from a doze/disable state to an awake/enable state. A status of a link 3 is not discussed.

### 6. Link processing method

### (1) Link processing method that a BSS configuration of a link 2 is not updated

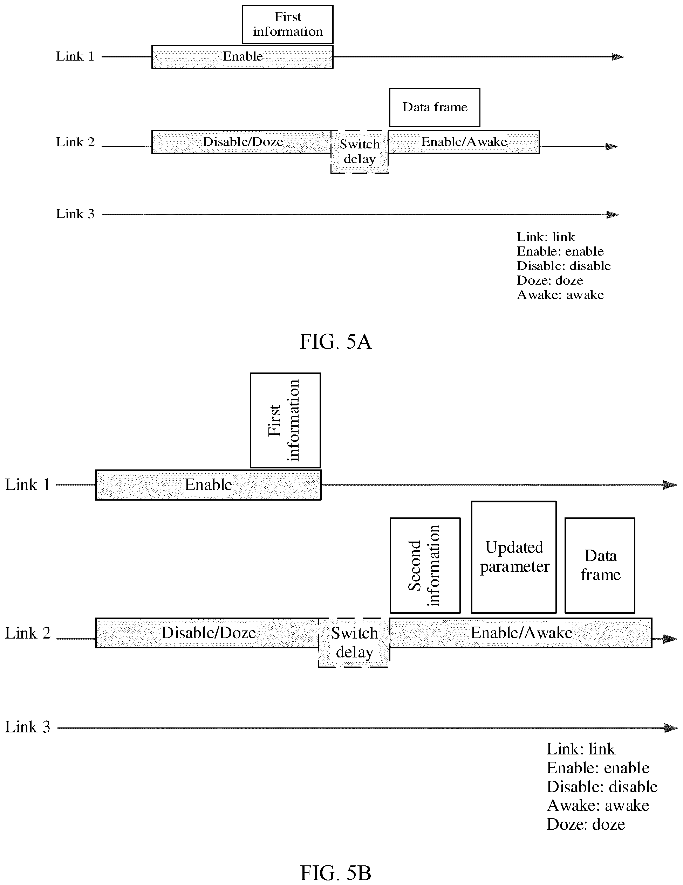

FIG. 5A is a schematic diagram of a link processing method according to an embodiment of this application. The link processing method may include the following steps.

101: An AP MLD determines first information of a link 2. The first information is used by a non-AP MLD to determine whether a BSS configuration of the link 2 is updated.

102: The AP MLD sends the first information of the link 2 on a link 1.

103: The non-AP MLD receives the first information of the link 2 on the link 1. If the BSS configuration of the link 2 is not updated, the non-AP MLD performs step 104.

104: The non-AP MLD uses the link 2 to transmit a data frame.

Step 101 may be an optional step. Optionally, when the non-AP MLD is a multi-link device on a single link, there is a switch delay before the data frame is transmitted by using the link 2; when the non-AP MLD is a multi-link device on a plurality of links, there is no switch delay. In addition, in step 104, when the non-AP MLD transmits the data frame by using the link 2, a BSS configuration that is used is the BSS configuration of the link 2 in the non-AP MLD.

The data frame may be an uplink data frame, a quality of service null (QoS NULL) frame, or a link status notification frame. The link status notification frame indicates that the second link is in an awake/enable state, so that the second MLD sends a downlink data frame on the second link in time. Optionally, the uplink data frame or the quality of service null (QoS NULL) frame can also indicate that the second link is in the awake/enable state.

It can be learned that, as shown in FIG. 5A, because the BSS configuration of the link 2 is not updated, the non-AP MLD directly transmits the data frame on the switched-to link 2, and does not need to transmit the data frame until a beacon frame on the link 2 is received after switching or status transition. According to a processing method shown in FIG. 3 or FIG. 4, a waiting time required before the data frame is transmitted on the link 2 is reduced.

Optionally, after step 103, the non-AP MLD may switch to the link 2 or transit the status of the link 2 to the awake/enable state based on the first information of the link 2.

### (2) Link processing method that the BSS configuration of the link 2 is updated

In an implementation, in step 104, if the BSS configuration of the link 2 is updated, as shown in FIG. 5B, a difference between the link processing method and the link processing method shown in FIG. 5A lies in that the BSS configuration of the link 2 is updated, and the following steps may be performed.

105: The non-AP MLD sends second information to the AP MLD on the link 2. The second information is a sequence number of the BSS configuration, an access point configuration sequence number (AP-CSN), or a check beacon (check beacon) value that identifies the link 2 in the non-AP MLD.

106: The AP MLD receives the second information, and sends, on the link 2 based on the second information, an updated parameter of the BSS configuration of the link 2.

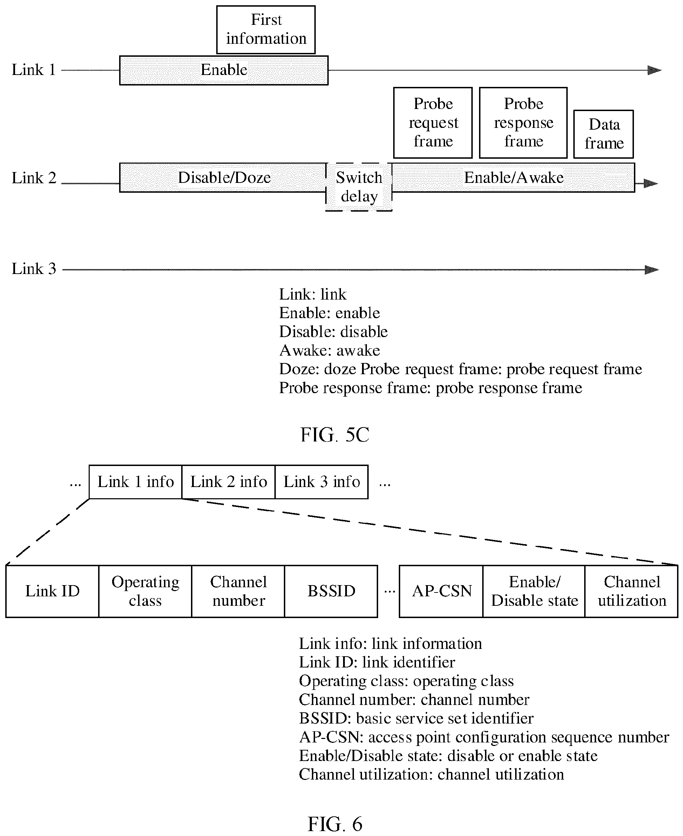

As shown in FIG. 5C, the second information in FIG. 5B may be carried in a unicast probe request (probe request) frame on the link 2. Third information may be carried in a probe response (probe response) frame on the link 2. An implementation may be as follows: The non-AP MLD sends the unicast probe request frame to the AP MLD on the link 2. The unicast probe request frame includes the second information. The non-AP MLD receives the probe response frame from the AP MLD on the link 2. The probe response frame is a simplified probe response frame and includes the updated parameter of the BSS configuration of the link 2. The updated parameter of the BSS configuration of the link 2 is determined by the AP MLD based on the second information.

For example, the AP MLD determines which parameters are updated in the current BSS configuration of the link 2 (that is, the BSS configuration of the link 2 corresponding to the first information) compared with the BSS configuration of the link 2 corresponding to the second information, and may return all updated parameters or updated key parameters in the probe response frame to the non-AP MLD.

107: The non-AP MLD receives the updated parameter of the BSS configuration of the link 2.

Further, the link processing method may further include: The non-AP MLD updates the BSS configuration of the link 2 in the non-AP MLD by using the updated parameter of the BSS configuration of the link 2, and transmits the data frame on the link 2 based on an updated BSS configuration of the link 2. The non-AP MLD further correspondingly updates the sequence number of the BSS configuration/AP-CSN/check beacon value that identifies the link 2.

Correspondingly, when the BSS configuration of the link 2 is not updated, step 104 may be: The non-AP MLD transmits the data frame on the link 2 by using the BSS configuration of the link 2 in the non-AP MLD.

It can be learned that, as shown in FIG. 5B, if the BSS configuration of the link 2 is updated, the non-AP MLD needs to send the second information, and receive the updated parameter of the BSS configuration of the link 2, so that the data frame can be transmitted on the link 2. In this implementation, the first MLD sends the unicast probe frame only after learning that the BSS configuration of the second link is updated, and does not need to send the unicast probe request frame regardless of whether there is an update. Therefore, in this implementation, a waiting time required before the data frame is transmitted in a link processing process is reduced.

In another implementation, if the BSS configuration of the link 2 is updated, the non-AP MLD may receive a beacon frame on the link 2, and after correctly receiving the beacon frame, transmit the data frame based on a parameter that is of the BSS configuration and that is carried in the beacon frame. This implementation is combined with FIG. 5A, to avoid a problem that a waiting time is excessively long because the data frame is transmitted only after the beacon frame is received. Therefore, this implementation can still reduce the waiting time required before the data frame is transmitted on the link 2.

In step 103, how the non-AP MLD determines whether the BSS configuration of the link 2 is updated based on the first information may be: The non-AP MLD determines whether the first information is consistent with the second information. If the first information is consistent with the second information, it indicates that the BSS configuration of the link 2 is not updated. If the first information is inconsistent with the second information, it indicates that the BSS configuration of the link 2 is updated. The first information is a sequence number of the BSS configuration, an AP-CSN, or a check beacon value that is in the AP MLD and that identifies the second link. The second information is a sequence number of the BSS configuration, an AP-CSN, or a check beacon value that is in the non-AP MLD and that identifies the second link.

For example, the first information is an AP-CSN 1, and the second information is an AP-CSN 2. If the AP-CSN 1 is equal to the AP-CSN 2, the BSS configuration of the link 2 corresponding to the AP-CSN 1 is not updated compared with the BSS configuration of the link 2 corresponding to the AP-CSN 2. That is, the BSS configuration of the link 2 is not updated. If the AP-CSN 1 is not equal to or greater than the AP-CSN 2, the BSS configuration of the link 2 corresponding to the AP-CSN 1 is updated compared with the BSS configuration of the link 2 corresponding to the AP-CSN 2. That is, the BSS configuration of the link 2 is updated. Further, the updated parameter that is updated in the BSS configuration of the link 2 may be obtained through the foregoing steps 105 to 107.

In this embodiment of this application, the second information of the link 2 in the non-AP MLD may be obtained and stored by the non-AP MLD from a beacon (beacon) frame or a probe response frame of the link 1, or may be obtained and stored by the non-AP MLD from a multi-link association response frame of the link 1. Therefore, before the non-AP MLD switches a link to the link 2 or transits the link status of the link 2, the non-AP MLD may compare the second information with the first information, to determine whether the BSS configuration of the link 2 is updated.

In addition to carrying the second information of the link 2, the beacon (beacon) frame, the probe response frame, or the multi-link association response frame of the link 1 may further carry other information of the link 2 and related information of another link. Descriptions are separately provided in the following.

For example, as shown in FIG. 6, the second information is an AP-CSN. The beacon frame of the link 1 may carry one or more types of information including but not limited to the following: an enable/disable state of each link, an AP-CSN of each link, channel utilization (channel utilization) of a link in an enable state, a quantity of stations of a link in enable state, a link identifier (link ID), an operating class (operating class), a channel number (channel number), and a basic service set identifier (BSSID). The enable/disable state of each link indicates whether an AP of each link in the AP MLD is enabled. The AP-CSN of each link is used for assisting the non-AP MLD in performing link switching or link status transition in the foregoing link processing. The channel utilization of the link in an enable state is used for selecting a link when the non-AP MLD recommends link switching or requires link switching, or used for selecting a recommended or required link when the non-AP MLD recommends link status transition or requires link status transition. The quantity of stations of the link in an enable state is used for assisting the non-AP MLD in evaluating a congestion degree of an AP based on a quantity of stations connected to the AP of the link.

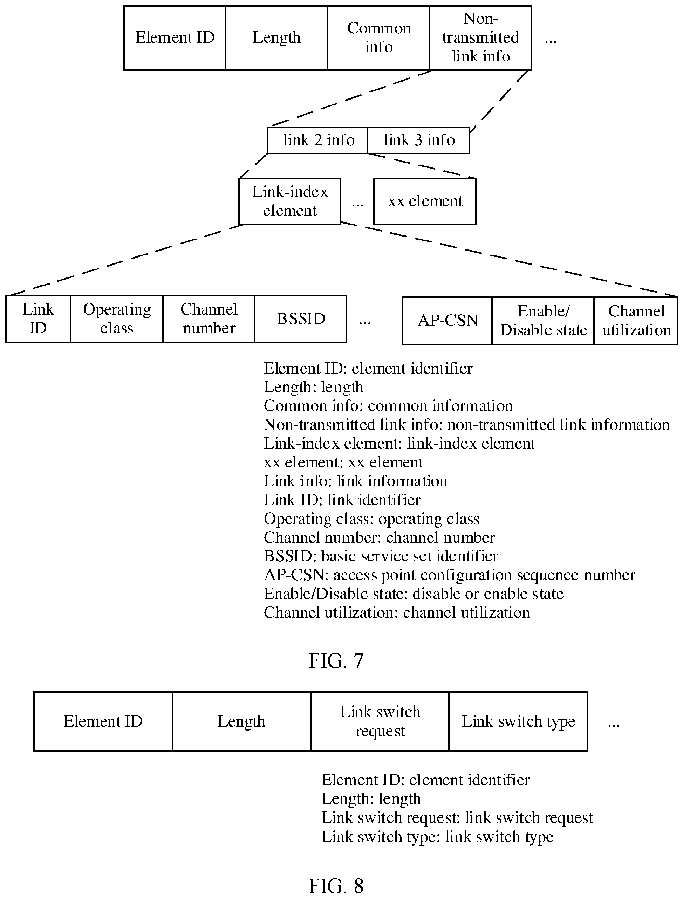

The probe response frame may be a multi-link probe response (multi-link probe response) frame. A manner of indicating the information about each link carried in the multi-link probe response frame is similar to that of indicating the information about each link carried in the multi-link association response frame. For example, an element in which information about a non-transmitted link is different from information about a transmitted link is carried in a link-index element (link-index element) of each non-transmitted link. For example, as shown in FIG. 7, the link 1 is a transmitted link. Therefore, a link-index element (link-index element) of a non-transmitted link does not include information about the link 1. Correspondingly, in addition to carrying an enable/disable state of a link, an AP-CSN of a link, channel utilization (channel utilization) of a link in enable state, a quantity of stations of a link in enable state, a link identifier (link ID), an operating class (operating class), a channel number (channel number), and a basic service set identifier (BSSID), a link-index element shown in FIG. 7 may further carry a timestamp (timestamp), a beacon interval (beacon Interval), and a capability information indication (capability information).

Optionally, the multi-link probe request (multi-link probe request) frame or the multi-link association request frame may carry a quantity of radio frequencies of a device and a link status. The quantity of radio frequencies of the device indicates whether the link shares a radio frequency with another link. For example, the link uses 1 bit to indicate whether the link shares one radio frequency with a previous link. The previous link refers to that when a plurality of pieces of link information is indicated, a link status of the previous link of the link may be disable or enable. If the link status is enable, it may be further indicated whether the link is in an awake state or a doze state.

Optionally, a correspondence between an arrangement sequence of the information about each link in the multi-link association request frame and an arrangement sequence of the information about each link in the multi-link association response frame may be used for determining an association status between each STA in the non-AP MLD and each AP in the AP MLD. Therefore, the AP MLD may adjust an arrangement location or order of the information about each link in the multi-link association response frame, to change the association status between each STA and each AP.

There is a possibility of multi-link aggregation: Only BSSs belonging to a same service set identifier (service set identifier, SSID) are allowed to be aggregated. That is, a data packet of one traffic identifier (traffic identifier, TID) is allowed to be transmitted through a plurality of links. That is, a TID may be mapped to the plurality of links. Therefore, in the multi-link association request shown in FIG. 7, the non-transmitted link profile information (Non-transmitted link profile info) does not need to carry an SSID element.

In step 102, the first information of the second link may be carried in a link switch response (link switch response) message, a cross-link information report (cross-link info report) message, a medium access control (MAC control) frame, or a traffic identifier-to-link mapping negotiation response (TID-to-link mapping negotiation response) message of the first link. Optionally, after step 103, the non-AP MLD may switch from the link 1 to the link 2 or transit the state of the link 2 to an awake/enable state based on the link switch response message, the cross-link info report message, or the TID-to-link mapping negotiation response message.

Optionally, after receiving the cross-link info report message, the non-AP MLD may return an acknowledge (ACK) message to the AP MLD on the link 1. Optionally, when the cross-link information (cross-link info) is carried in an A-control (control) field in the MAC control frame, after receiving the MAC control frame, the non-AP MLD may not need to return an acknowledge (ACK) message.

The link switch response message is returned by the AP MLD in response to a link switch request (link switch request) message from the non-AP MLD. The TID-to-link mapping negotiation response message is returned by the AP MLD in response to a TID-to-link mapping negotiation request (TID-to-link mapping negotiation request) message sent by the non-AP MLD. Optionally, the cross-link information report (cross-link info report) message may be returned by the AP MLD in response to a cross-link information request (cross-link info request) message sent by the non-AP MLD. Therefore, when link quality of the link 1 deteriorates, or the cross-link info needs to be learned to assist in link switch, a STA in the non-AP MLD or the non-AP MLD initiates a link switch request or a cross-link information request. That is, before step 101, the non-AP MLD may first send the request message to request link switch or link status transition, to perform steps 102 to 107. It can be learned that these request messages and response messages help the non-AP MLD initiate a request for link switch or link status transition in a plurality of scenarios, and transmit a data frame on a switched-to link or a link whose status is transited in time.

### 3. Link switch method initiated by the non-AP MLD and responded by the AP MLD

In the link switch method, the non-AP MLD may initiate a request by using the link switch request message, the cross-link info request message, or the TID-to-link mapping negotiation request message. The AP MLD may respond or answer by using the corresponding link switch response message, the cross-link info report message, or the TID-to-link mapping negotiation response message. Different request modes for link switch determine information carried in these request messages. Correspondingly, different answer modes also determine information carried in these response messages. However, with reference to the foregoing implementations, these response messages carry at least the first information of the switched-to link. The following optional request modes and answer modes greatly improve flexibility of a link switch operation, and facilitate use of a corresponding request mode and answer mode based on a requirement of a specific scenario.

The link switch response message and the cross-link info report message carry information to indicate whether the AP MLD accepts a link switch request initiated by the non-AP MLD. The TID-to-link mapping negotiation response message indicates whether the AP MLD accepts a mapping configuration request between the traffic identifier and the link initiated by the non-AP MLD. The mapping configuration request between the traffic identifier and the link may actually be a link switch request. Therefore, the TID-to-link mapping negotiation response message indicates whether the AP MLD accepts the link switch request initiated by the non-AP MLD.

As shown in Table 2, the request mode of the non-AP MLD may include but is not limited to one or more of the following: (1a) Request link switch and provide no switched-to target link; (2a) recommend link switch and provide one or more switched-to target links; and (3a) require link switch, provide a switched-to target link, and accept no modification on the switched-to target link. Correspondingly, the answer mode of the AP MLD may include but is not limited to one or more of the following: (1b) Accept link switch and indicate a switched-to target link; (2b) change a recommended or required switched-to target link, that is, accept no requested or recommended switched-to target link by the non-AP MLD, and provide one or more recommended target links additionally; (3b) accept no requested switched-to target link by the non-AP MLD, indicate an only switched-to target link, and indicate that the non-AP MLD can only switch to the target link; and (4b) reject link switch, and optionally, the rejection reason may be further indicated. The target link described in this part is a switched-to link, that is, the second link in the foregoing embodiments, for example, the link 2.

As shown in Table 2, for the request mode (1a), optional answer modes include the answer mode (1b) and the answer mode (4b). For the request mode (2a), optional answer modes include the answer mode (1b), the answer mode (2b), the answer mode (3b), and the answer mode (4b). For the request mode (3a), optional answer modes include the answer mode (1b) and the answer mode (4b). For different request modes, the following describes information that may be carried in the link switch request message, the cross-link info request message, and the TID-to-link mapping negotiation request message, corresponding answer modes, and information that may be carried in the link switch response message, the cross-link info report message, and the TID-to-link mapping negotiation response message. That is, the link switch response message, the cross-link info report message, and the TID-to-link mapping negotiation response message not only carry the first information of the link 2, but also may carry other information of the link 2 or information of another link.

**Table 2**

| Optional request modes of the non-AP MLD | Optional answer modes of the AP MLD |
|---|---|
| (1a) Request link switch and provide no switched-to target link. | (1b) Accept link switch and indicate a switched-to target link. |
| | (4b) Reject link switch. |
| (2a) Recommend link switch and provide one or more switched-to target links. | (1b) Accept link switch and indicate one of the switched-to target links. |
| | (2b) Change a recommended or required switched-to target link. |
| | (3b) Accept no requested switched-to target link by the non-AP MLD, and indicate an only switched-to target link. |
| | (4b) Reject link switch. |
| (3a) Require link switch, provide a switched-to target link, and accept no modification on the switched-to target link. | (1b) Accept link switch and indicate one of switched-to target links. |
| | (4b) Reject link switch. |

For the request mode (1a), the link switch request message, the cross-link info request message, or the TID-to-link mapping negotiation request message may carry a reason indication for link switch (reason code for link switch) used for notifying the AP MLD of the reason for link switch. For example, the reason for link switch may be that a received signal strength indicator (Received signal strength indicator, RSSI) is poor, a delay is long, a request is made to change a traffic identifier-to-link mapping (TID-to-link mapping), or a real-time service is enabled, or the like.

Correspondingly, for the answer mode (1b) of the request mode (1a), the link switch response message, the cross-link info report message, or the TID-to-link mapping negotiation response message returned by the AP MLD may include but is not limited to one or more types of the following information: a status indication (status code), a link identifier of a switched-to target link, and first information. The status indication (status code) indicates whether the AP MLD accepts a link switch request of the non-AP MLD. For example, if the AP MLD accepts the link switch request of the non-AP MLD, the link switch response message, the cross-link info report message, or the TID-to-link mapping negotiation response message may further carry the link identifier of the switched-to target link and the first information (such as the AP-CSN).

For the answer mode (4b) of the request mode (1a), the link switch response message, the cross-link info report message, or the TID-to-link mapping negotiation response message returned by the AP MLD may include but is not limited to one or more types of the following information: a status indication (status code) of rejecting a link switch request, and a rejection reason.

For the request mode (2a), the link switch request message, the cross-link info request message, or the TID-to-link mapping negotiation request message may carry information including but not limited to the following: a reason for link switch, and a link identifier of a switched-to target link.

Correspondingly, for the answer mode (1b) of the request mode (2a), the link switch response message, the cross-link info report message, or the TID-to-link mapping negotiation response message returned by the AP MLD may include but is not limited to one or more types of the following information: a status indication (status code), and first information of the requested target link.

For the answer mode (2b) of the request mode (2a), the link switch response message, the cross-link info report message, or the TID-to-link mapping negotiation response message returned by the AP MLD may include but is not limited to one or more pieces of the following information: additionally provided link identifiers of one or more target links that can be switched to, and related information of these target links. The related information of the target link includes first information, a link switch mode (Link Switch mode), a count of link switch or an offset of a target switch time, a link identifier, channel utilization, and a quantity of STAs. In this answer mode, the non-AP MLD further needs to perform operations in steps 104 to 107 in the foregoing embodiment based on the first information, so that the AP MLD may learn a switched-to target link finally selected by the non-AP MLD through a link used by the non-AP MLD to transmit a data frame. That is, in this implementation, the non-AP MLD decides to switch to a link recommended by the AP-MLD. Therefore, the link switch response message, the cross-link info report message, or the TID-to-link mapping negotiation response message should include information about all recommended links to assist the non-AP MLD in a decision.

The link switch mode indicates a transmission limitation before link switch. When the link switch mode is set to 1, it indicates that a station should stop transmission before link switch. When the link switch mode is set to 0, station transmission is not limited. The count of link switch indicates a quantity of beacon frames sent before a new link is switched to. When the count of link switch is set to 1, it indicates that link switch occurs just before a sending moment of a next beacon frame. When the count of link switch is set to 0, it indicates that link switch occurs at any moment after a frame including the information is sent. Alternatively, the count of link switch indicates the offset (offset) of the target switch time. Optionally, for the offset of the target switch time, a sending time of a next beacon frame on a switched-to link needs to be considered. In this way, for the foregoing implementation in which the beacon frame on the switched-to link needs to be received, this helps avoid that the non-AP MLD waits for an excessively long time. The channel utilization and the quantity of STAs are used by the non-AP MLD to learn a quantity of STAs connected to the target link and channel conditions.

For the answer mode (3b) of the request mode (2a), the link switch response message, the cross-link info report message, or the TID-to-link mapping negotiation response message returned by the AP MLD may include but is not limited to the following information: a link identifier and related information of an only switched-to target link. The related information of the target link may include but is not limited to one or more pieces of the following information: first information, a link switch mode (Link Switch mode), a count of link switch or an offset of a target switch time, a link identifier, channel utilization, and a quantity of STAs.

For the answer mode (4b) of the request mode (2a), the link switch response message, the cross-link info report message, or the TID-to-link mapping negotiation response message returned by the AP MLD may include but is not limited to one or more types of the following information: a status indication (status code) of rejecting a link switch request, and a rejection reason.

For the request mode (3a), the link switch request message, the cross-link info request message, or the TID-to-link mapping negotiation request message may carry a reason indication for link switch (reason code for link switch), and a link identifier of a target link that requires to be switched to.

Correspondingly, for the answer mode (1b) of the request mode (3a), the link switch response message, the cross-link info report message, or the TID-to-link mapping negotiation response message returned by the AP MLD may include but is not limited to one or more types of the following information: a status indication (status code) of accepting a link switch request, a link identifier of the target link, first information of the target link, a link switch mode, a count of link switch or an offset of a target switch time, channel utilization, and a quantity of STAs.

For the answer mode (4b) of the request mode (3a), the link switch response message, the cross-link info report message, or the TID-to-link mapping negotiation response message returned by the AP MLD may include but is not limited to one or more types of the following information: a status indication (status code) of rejecting a link switch request, and a rejection reason.

### 4. Link status transition method initiated by the non-AP MLD and responded by the AP MLD

In the link status transition method, the non-AP MLD may initiate a request by using the link switch request message, the cross-link info request message, or the TID-to-link mapping negotiation request message. The AP MLD may respond or answer by using the corresponding link switch response message, the cross-link info report message, or the TID-to-link mapping negotiation response message. This implementation is the same as that of the link switch method that is initiated by the non-AP MLD and responded by the AP MLD in the point 3. An only difference is that in the point 3, the target link is a switched-to link, and in this implementation, a target link is a link whose status is transited. Therefore, for related content in this implementation, "switch" in the foregoing Table 2 and related content may be changed to "status transition", as shown in Table 3. For information that may be carried in each request message and each response message and that is described based on Table 3, refer to related content in Table 2. Details are not described herein again.

The link switch response message and the cross-link info report message carry information to indicate whether the AP MLD accepts a status transition request initiated by the non-AP MLD. The TID-to-link mapping negotiation response message indicates whether the AP MLD accepts a mapping configuration request between the traffic identifier and the link initiated by the non-AP MLD. Optionally, the mapping configuration request between the traffic identifier and the link may actually be a link switch request. Therefore, the TID-to-link mapping negotiation response message indicates whether the AP MLD accepts the link status transition request initiated by the non-AP MLD.

**Table 3**

| Optional request modes of the non-AP MLD | Optional answer modes of the AP MLD |
|---|---|
| (1a) Recommend status transition, and recommend one or more target links whose statuses are transited. | (1b) Accept status transition and indicate a target link whose status is transited. |
| | (4b) Reject status transition. |
| (2a) Recommend link status transition and provide one or more target links whose statuses are transited. | (1b) Accept status transition and indicate one of the target links whose statuses are transited. |
| | (2b) Change a recommended or required target link whose status is transited. |
| | (3b) Accept no target link whose status is transited that is requested by the non-AP MLD, and indicate an only target link whose status is transited. |
| | (4b) Reject link status transition. |
| (3a) Require link status transition, provide a target link whose status is transited, and accept no modification on the target link whose status is transited. | (1b) Accept link status transition and indicate one of switched-to target links. |
| | (4b) Reject link status transition. |

### 5. Link status transition method initiated by the AP MLD and responded by the non-AP MLD

In this implementation, because a request is initiated by the AP MLD, a request message sent by the AP MLD needs to carry first information of a link whose status is transited. Correspondingly, the non-AP MLD may return a response message. The response message indicates whether the non-AP MLD accepts the request. If the non-AP MLD does not accept the request, the response message may carry a rejection reason parameter. If the non-AP MLD accepts the request, the response message may carry a link identifier of an accepted target link, or may not carry the link identifier of the accepted target link and indicate that the link status transition request is accepted.

The following describes possible request modes, answer modes, and information that may be carried by using an example in which the AP MLD initiates a request by using the TID-to-link mapping negotiation request message and the non-AP MLD responds with the TID-to-link mapping negotiation response message. The TID-to-link mapping negotiation response message indicates whether the non-AP MLD accepts a mapping configuration request between the traffic identifier and the link initiated by the AP MLD. Optionally, the mapping configuration request between the traffic identifier and the link may actually be a link status transition request. Therefore, the TID-to-link mapping negotiation response message indicates whether the non-AP MLD accepts the link status transition request initiated by the AP MLD.

**Table 4**

| Optional request modes of the AP MLD | Optional answer modes of the non-AP MLD |
|---|---|
| (1a) Recommend status transition, and recommend one or more target links whose statuses are transited. | (1b) Accept status transition of all recommended or required target links whose statuses are transited. |
| | (2b) Accept status transition of one or more of the recommended target links whose statuses are transited. |
| | (3b) Reject status transition. |
| (2a) Require status transition, require one or more target links whose statuses are transited, and accept no modification on the target link. | (1b) Accept status transition of all recommended or required target links whose statuses are transited. |
| | (3b) Reject status transition. |

As shown in Table 4, the request mode of the AP MLD may include but is not limited to one or more of the following: (1a) Recommend status transition, and recommend one or more target links whose statuses are transited; and (2a) require status transition, require one or more target links whose statuses are transited, and accept no modification on the target link. Correspondingly, the answer mode of the non-AP MLD may include but is not limited to one or more of the following: (1b) Accept status transition of all recommended or required target links whose statuses are transited; (2b) accept status transition of one or more of the recommended target links whose statuses are transited; and (3b) reject status transition, and optionally, the rejection reason may be further indicated. The target link described in this part is a link that needs to be transited from a disable or doze state to an enable or awake state, that is, the second link in the foregoing embodiments, for example, the link 2.

For the request mode (1a), optional answer modes include the answer mode (1b), the answer mode (2b), the answer mode (3b). For the request mode (2a), optional answer modes include the answer mode (1b) and the answer mode (3b). For different request modes, the following describes information that may be carried in a TID-to-link mapping negotiation request frame, a part of corresponding answer modes, and information that may be carried in the TID-to-link mapping negotiation response frame.

For the request mode (1a), the TID-to-link mapping negotiation request frame may carry a reason indication for link status transition (reason code for link status switch), and related information of one or more target links whose statuses are transited. In addition to first information (for example, a current AP-CSN of the target link), the related information of the target link may further include a link identifier, network allocation vector (network allocation vector, NAV) information, channel utilization, a quantity of STAs, and a link policy.

For the answer mode (1b) corresponding to the request mode (1a), the TID-to-link mapping negotiation response frame carries a status indication. The status indication indicates that the non-AP MLD accepts link status transition and status transition of recommended or required target links.

For the answer mode (2b) corresponding to the request mode (1a), the TID-to-link mapping negotiation response frame carries a status indication and link identifiers of one or more target links. The status indication indicates that the non-AP MLD accepts link status transition requested by the AP MLD. The link identifiers of the one or more target links are selected by the non-AP MLD from target links recommended by the AP MLD.

For the answer mode (3b) corresponding to the request mode (1a), the TID-to-link mapping negotiation response frame carries a status indication. The status indication indicates that the non-AP MLD does not accept requested status transition. Further, the TID-to-link mapping negotiation response frame may further carry a rejection reason.

### 6. Link switch method initiated by the AP MLD and responded by the non-AP MLD

In this implementation, because a request is initiated by the AP MLD, a request message sent by the AP MLD needs to carry first information of a switched-to link. Correspondingly, the non-AP MLD may return a response message. The response message indicates whether the non-AP MLD accepts the request. If the non-AP MLD does not accept the request, the response message may carry a rejection reason parameter. If the non-AP MLD accepts the request, the response message may carry a link identifier of an accepted target link, or may not carry the link identifier of the accepted target link and indicate that the link status transition request is accepted.

For example, the AP MLD initiates a request by using the TID-to-link mapping negotiation request message, and the non-AP MLD responds with the TID-to-link mapping negotiation response message. The TID-to-link mapping negotiation response message indicates whether the non-AP MLD accepts a mapping configuration request between the traffic identifier and the link initiated by the AP MLD. Optionally, the mapping configuration request between the traffic identifier and the link may actually be a link switch request. Therefore, the TID-to-link mapping negotiation response message indicates whether the non-AP MLD accepts the link switch request initiated by the AP MLD.

This implementation of the link switch method is the same as that of the link status transition method that is initiated by the AP MLD and responded by the non-AP MLD in the point 5. An only difference is that in the point 5, the target link is a link whose status is transited, and in this implementation, the target link is a switched-to link. Therefore, for related content in this implementation, "status transition" in the foregoing Table 4 and related content may be changed to "switch", as shown in Table 5. For information that may be carried in each request message and each response message and that is described based on Table 5, refer to related content in Table 4. Details are not described herein again.

**Table 5**

| Optional request modes of the AP MLD | Optional answer modes of the non-AP MLD |
|---|---|
| (1a) Recommend switch, and recommend one or more switched-to target links. | (1b) Accept switch of all recommended or required target links. |
| | (2b) Accept switch of one or more of the recommended target links. |
| | (3b) Reject switch. |
| (2a) Require switch, require switch of one or more target links, and accept no modification on the target link. | (1b) Accept switch of all recommended or required target links. |
| | (3b) Reject switch. |

For the foregoing request modes and answer modes, as described in the third embodiment, the link switch request message, the cross-link info request message, the TID-to-link mapping negotiation request message, the link switch response message, the cross-link info report message, and the TID-to-link mapping negotiation response message may carry a newly defined link switch element (link switch element).

As shown in FIG. 8, the link switch element may include a link switch request (link switch request) field and a link switch type (link switch type) field. In each field or frame in this application, a field identifier (element ID) indicates a field, and a length (Length) indicates a length of the field. The link switch request field indicates whether a STA that transmits a link of the link switch element is a STA of a link switch request or a STA of a link switch response. The link switch type field indicates one of the foregoing request modes and answer modes. For example, when the link switch type field is 0 to 2, it indicates that a message that carries the link switch element is a link switch request message in the request mode (1a) to the request mode (3a). When the link switch type field is 3 to 6, it indicates that a message that carries the link switch element is a link switch response message in the foregoing answer mode (1b) to the answer mode (4b). Further, the non-AP MLD and the AP MLD may determine, based on the link switch element, information that needs to be carried in the request and information that needs to be carried in the response.

For the foregoing request modes and answer modes, as described in the fifth embodiment, the TID-to-link mapping negotiation request message and the TID-to-link mapping negotiation response message may carry a newly defined link status transition element (link status transition element). A structure of the link status transition element is similar to that shown in FIG. 8, and may include a link status transition request (link status transition request) field and a link status transition type (link status transition type) field. The link status transition request field indicates whether a STA that transmits a link of the link status transition element is a STA of a link status transition request or a STA of a link status transition response. The link status transition type field indicates one of the foregoing request modes and answer modes. For example, when the link status transition type field is 0 to 1, it indicates that a message that carries the link status transition element is one of the foregoing request modes (1a) to request mode (2a). When the link status transition type field is 2 to 4, it indicates that a message that carries the link status transition element is one of the answer modes (1b) to answer mode (3b). Further, the non-AP MLD and the AP MLD may determine, based on the link status transition element, information that needs to be carried in the request and information that needs to be carried in the response.

### 7. Another link processing method

A difference between the method and the link processing method described in part 6 lies in that, in this aspect, the second MLD determines whether a BSS configuration of a switched-to second link or the second link whose status is transited is updated. Further, on a first link, an updated parameter is sent to a first MLD, or the first MLD is notified that the BSS configuration of the second link is not updated. In this way, the first MLD can directly transmit a data frame on the switched-to second link or the second link whose status is transited, and does not need to transmit the data frame until a beacon frame is further received and a latest parameter of the BSS configuration is obtained on the switched-to second link or the second link whose status is transited. Therefore, the method reduces a waiting time required before the data frame is transmitted on the switched-to second link or the second link whose status is transited.

For ease of description, an example in which the first MLD is a non-AP MLD and the second MLD is an AP MLD is used. In addition, for a first link and a second link included in a plurality of links between the AP MLD and the non-AP MLD, a link 1 and a link 2 may be separately used as an example. The link 2 is a switched-to link from the link 1 or a link whose status is transited. That is, the link 1 is in an enable state, and the link 2 is in a doze/disable state, and the link 2 needs to be transited from a doze/disable state to an awake/enable state. A status of a link 3 is not discussed.

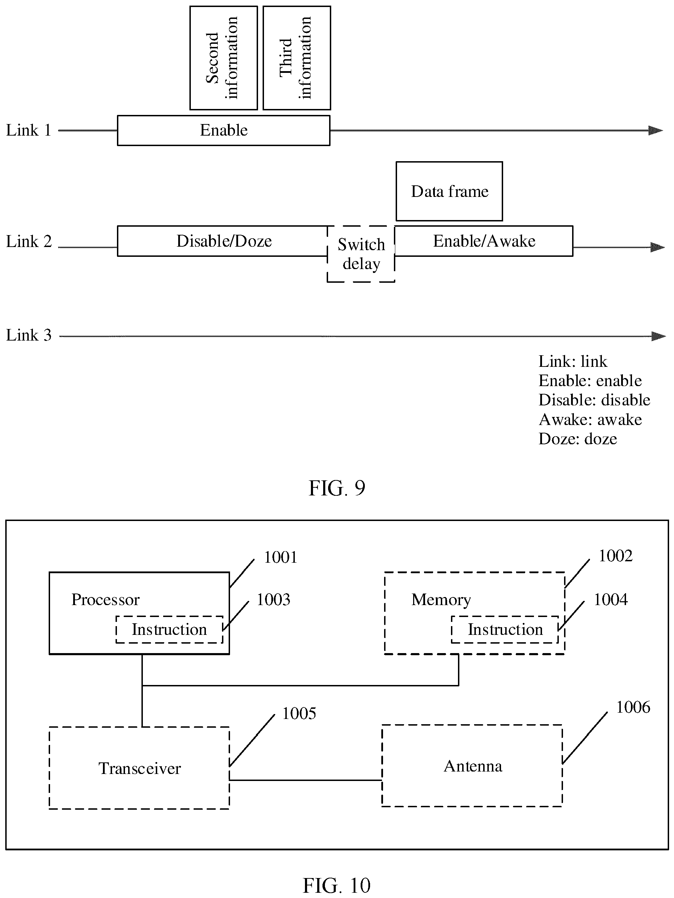

With reference to FIG. 9, the link processing method may include the following steps.

201: The non-AP MLD sends second information of the link 2 on the link 1. The second information is used by the AP MLD to determine whether a BSS configuration of the link 2 is updated.

202: The AP MLD receives the second information of the link 2 on the link 1.

203: The AP MLD sends third information on the link 1. The third information is determined by the AP MLD based on the second information. The third information indicates that the BSS configuration of the link 2 is not updated or an updated parameter of the BSS configuration of the link 2.

204: The non-AP MLD receives the third information on the link 1, and transmits a data frame on the link 2 based on the third information.

It can be learned that the non-AP MLD can directly transmit the data frame before receiving a beacon frame on the switched-to link 2 or the link 2 whose status is transited. This reduces a waiting time required before the link 2 transmits the data frame.

When the BSS configuration of the link 2 is updated, the third information includes the updated parameter of the BSS configuration of the second link. When the BSS configuration of the link 2 is not updated, the third information may indicate that the BSS configuration of the second link is not updated.

When the BSS configuration of the link 2 is updated, in step 204, that the non-AP MLD transmits a data frame on the link 2 based on the third information may include: The non-AP MLD updates the BSS configuration of the link 2 in the non-AP MLD by using the updated parameter of the BSS configuration of the link 2, and transmits the data frame on the link 2 based on an updated BSS configuration of the link 2. The non-AP MLD further correspondingly updates a sequence number of the BSS configuration/AP-CSN/check beacon value that identifies the link 2. When the BSS configuration of the link 2 is not updated, the non-AP MLD transmits the data frame on the link 2 by using the BSS configuration of the link 2 in the non-AP MLD.

The data frame may be an uplink data frame or a quality of service null (QoS NULL) frame, to notify the second MLD that the link 2 is in an awake/enable state. Optionally, the first MLD may further transmit a link status notification frame on the link 2. The link status notification frame indicates that the link 2 is in the awake/enable state, so that the second MLD can send a downlink data frame on the link 2 in time.

The second information of the link 2 is a sequence number of the BSS configuration, an access point configuration sequence number (AP-CSN), or a check beacon (check beacon) value that is stored in the first MLD and that identifies the link 2. The first information is a sequence number of the BSS configuration, an access point configuration sequence number (AP-CSN), or a check beacon (check beacon) value that is in the second MLD and that identifies the link 2. In this way, the second MLD may compare whether the first information is consistent with the second information. If the first information is consistent with the second information, it indicates that the BSS configuration of the link 2 is not updated. If the first information is inconsistent with the second information, it indicates that the BSS configuration of the link 2 is updated. This helps the AP MLD learn, based on the first information and the second information, whether the BSS configuration of the link 2 is updated.

That is, the first information of the link 2 is a sequence number of the current BSS configuration, an AP-CSN, or a check beacon value of the link 2. The second information is a sequence number of the BSS configuration, an AP-CSN, or a check beacon value that is of the link 2 and that is previously obtained by the non-AP MLD. Therefore, if the recently updated or current BSS configuration of the link 2 is not updated compared with the BSS configuration of the link 2 that is previously obtained by the non-AP MLD, the first information is equal to the second information. If the recently updated or current BSS configuration of the link 2 is updated, the first information is not equal to or greater than the second information.

For example, the first information of the link 2 is an AP-CSN 1, and the second information of the link 2 is an AP-CSN 2. If the AP-CSN 1 is equal to the AP-CSN 2, the BSS configuration of the link 2 corresponding to the AP-CSN 1 is not updated compared with the BSS configuration of the link 2 corresponding to the AP-CSN 2. That is, the BSS configuration of the link 2 is not updated. If the AP-CSN 1 is not equal to or greater than the AP-CSN 2, the BSS configuration of the link 2 corresponding to the AP-CSN 1 is updated compared with the BSS configuration of the link 2 corresponding to the AP-CSN 2. That is, the BSS configuration of the link 2 is updated. Further, the updated parameter that is updated in the BSS configuration of the link 2 may be obtained through the third information.

Optionally, the second information of the link 2 is obtained by the non-AP MLD from a beacon (beacon) frame or a multi-link probe response frame of the link 1 when the non-AP MLD performs channel sounding. Alternatively, the second information of the link 2 is obtained by the non-AP MLD from a multi-link probe response frame of the link 1 when the non-AP MLD performs link association.

Optionally, the beacon (beacon) frame, the multi-link probe response frame, or a multi-link association response frame of the link 1 may carry information about a plurality of links or all links. Information about each link includes the second information, and further includes but is not limited to one or more of the following: a link status, channel utilization, and the like. In this implementation, when the non-AP MLD performs link switching or link status transition, the non-AP MLD can select, based on the information, a switched-to link or a link whose status is transited.

For a manner of carrying the second information in the beacon (beacon) frame of the link 1, refer to related descriptions in FIG. 6 in the part 6. For a manner of carrying the second information in the multi-link probe response frame, refer to related descriptions in FIG. 7 in the part 6. For other carried information, refer to the description in the part 6.

In an optional implementation, the non-AP MLD may send a link switching request message, a cross-link information report request message, or a request frame for negotiating a mapping relationship between a traffic identifier and a link on link 1, to notify the AP MLD of the second information of the link 2. That is, the second information of the link 2 is carried in the link switching request message, the cross-link information report request message, or the request frame for negotiating the mapping relationship between the traffic identifier and the link.

Correspondingly, the non-AP MLD may receive a link switching response message, a cross-link information report message, a medium access control frame, or a response frame for negotiating a mapping relationship between a traffic identifier and a link on the link 1, to obtain the third information of the link 2. In an implementation, that the first multi-link device (MLD) receives the third information on the link 1 includes: The non-AP MLD receives, on the link 1, the link switching response message, the cross-link information report message, the medium access control frame, or the response frame for negotiating the mapping relationship between the traffic identifier and the link on. The third information of the link 2 is carried in the link switching response message, the cross-link information report message, the medium access control frame, or the response frame for negotiating the mapping relationship between the traffic identifier and the link.

The request frame for negotiating the mapping relationship between the traffic identifier and the link from the non-AP MLD is sent when the non-AP MLD needs to change the mapping relationship between the link and the traffic identifier, so that link statuses of some links need to be transited from a disable/doze state to an enable/awake state. Correspondingly, the response frame for negotiating the mapping relationship between the traffic identifier and the link returned by the AP MLD indicates whether the AP MLD accepts a mapping configuration request between the traffic identifier and the link. Optionally, if the AP MLD accepts the mapping configuration request, the response frame for negotiating the mapping relationship between the traffic identifier and the link includes the third information of the link 2. If the AP MLD does not accept the mapping configuration request, the response frame for negotiating the mapping relationship between the traffic identifier and the link does not include the third information of the link 2.

It can be learned that, in this implementation, the non-AP MLD may actively report the second information of the switched-to link, to obtain the third information. This helps further shorten a waiting time required before the data frame is transmitted on the switched-to link.

From a perspective of initiation of the non-AP MLD, the following describes other information that may be carried by the non-AP in addition to the second information of the link 2, and other information that may be carried by the AP MLD in addition to the third information of the link 2.

### 1. Link switch method initiated by the non-AP MLD and responded by the AP MLD

In the link switch method, the non-AP MLD may initiate a request by using the link switch request message, the cross-link info request message, or the TID-to-link mapping negotiation request message. The AP MLD may respond or answer by using the corresponding link switch response message, the cross-link info report message, or the TID-to-link mapping negotiation response message. Different request modes for link switch determine information carried in these request messages. Correspondingly, different answer modes also determine information carried in these response messages. However, with reference to the foregoing implementations, these request messages carry at least the second information of the switched-to link, and these response messages carry at least the third information of the switched-to link. Various optional request modes and answer modes greatly improve flexibility of a link switch operation, and facilitate use of a corresponding request mode and answer mode based on a requirement of a specific scenario.

The link switch response message and the cross-link info report message carry information to indicate whether the AP MLD accepts a link switch request initiated by the non-AP MLD. The TID-to-link mapping negotiation response message indicates whether the AP MLD accepts a mapping configuration request between the traffic identifier and the link initiated by the non-AP MLD. The mapping configuration request between the traffic identifier and the link may be actually a link switch request. Therefore, the TID-to-link mapping negotiation response message indicates whether the AP MLD accepts the link switch request initiated by the non-AP MLD.

A difference between the request message and the response message in this part and the point 3 in the part 6 lies in that the request message in this part carries at least the second information of the switched-to link, and the response message in this part carries at least the third information of the switched-to link, and does not need to carry the first information of the switched-to link. For other content, refer to point 3 in part 6. Details are not described herein again.

### 2. Link status transition method initiated by the non-AP MLD and responded by the AP MLD

In the link status transition method, the non-AP MLD may initiate a request by using the link switch request message, the cross-link info request message, or the TID-to-link mapping negotiation request message. The AP MLD may respond or answer by using the corresponding link switch response message, the cross-link info report message, or the TID-to-link mapping negotiation response message. This implementation is the same as that of the link switch method that is initiated by the non-AP MLD and responded by the AP MLD in the point 1. An only difference is that in the point 3, the target link is a switched-to link, and in this implementation, a target link is a link whose status is transited. Therefore, for related content in this implementation, "switch" in the point 1 in the part 7 and related content may be changed to "status transition".

Optionally, a difference between the request message and the response message in this part and the point 4 in the part 6 lies in that the request message in this part carries at least the second information of the switched-to link, and the response message in this part carries at least the third information of the switched-to link, and does not need to carry the first information of the switched-to link. For other content, refer to point 4 in part 6. Details are not described herein again.

It may be understood that the foregoing embodiments have their own emphasis. For an implementation that is not described in detail in one embodiment, refer to another embodiment. Details are not described herein again. Further, embodiments described in this specification may be independent solutions, or may be combined based on internal logic. These solutions all fall within the protection scope of this application. In other words, the foregoing embodiments may be combined with each other. For example, the link processing method described in the point 1 in the part 6 may be combined with the link processing method described in point 2 in the part 6. For another example, the methods described in the point 1, the point 2, and the point 3 in the part 6 may be combined. For another example, the methods described in the point 1, the point 2, and the point 4 in the part 6 may be combined. For another example, the methods described in the point 1, the point 2, and the point 5 in the part 6 may be combined. For another example, the methods described in the point 1, the point 2, and the point 6 in the part 6 may be combined. For another example, the link processing method shown in FIG. 9 in the part 7 may be combined with the method described in point 1 in the part 7. For another example, the link processing method shown in FIG. 9 in the part 7 may be combined with the method described in point 2 in the part 7.

The foregoing separately describes the link processing methods provided in embodiments of this application from a perspective of interaction between the first MLD and the second MLD, for example, from a perspective of interaction between a non-AP MLD and an AP MLD. Related operations of the non-AP MLD and the AP MLD before and after switch between a link 1 and a link 2 are described above by using the link 1 and the link 2 as an example. In operations related to the non-AP MLD and the AP MLD, operations of the non-AP MLD and the AP MLD on the link 1 may be separately performed by a STA 1 corresponding to the link 1 and an AP 1 corresponding to the link 1. Correspondingly, operations of the non-AP MLD and the AP MLD on the link 2 may be separately performed by a STA 2 corresponding to the link 2 and an AP 2 corresponding to the link 2.

To implement fast switch between links and fast transition between link statuses, the following plurality of multi-link devices are described in embodiments of this application.

An embodiment of this application provides a multi-link device. The multi-link device includes one or more stations. A first station and a second station are used as an example.

The first station receives first information of a second link on a first link. The first information is used by the multi-link device to determine whether a basic service set BSS configuration of the second link is updated.

When the BSS configuration of the second link is not updated, the second station transmits a data frame on the switched-to second link or the second link whose link status is transited.

It can be learned that before the multi-link device switches from the first link to the second link or transits the link status of the second link, the multi-link device may learn whether a parameter of the BSS configuration of the second link is updated. When the parameter of the BSS configuration of the second link is not updated, after the second link is switched to or the link status of the second link is transited, the second station can directly transmit the data frame on the second link without waiting for a beacon frame to be received. This shortens a waiting time required before the data frame is transmitted on the switched-to second link or the second link whose link status is transited.

The multi-link device described in this embodiment of this application has any function of the first MLD in the first aspect of the summary and any function of the non-AP MLD in the part 6 of the specific implementations. For all technical details of the multi-link device, refer to the content in the first aspect of the summary and in the part 6 of the specific implementations. Details are not described herein again.

An embodiment of this application provides a multi-link device. The multi-link device includes one or more access points. A first access point and an access point are used as an example.

The first access point determines first information of a second link, and sends the first information of the second link on a first link. The first information is used by a non-AP MLD to determine whether a basic service set BSS configuration of the second link is updated.

It can be learned that before the multi-link device switches from the first link to the second link or transits a link status of the second link, the first access point may notify a first station of the first information of the second link, so that a second station determines whether a parameter of the BSS configuration of the second link is updated. If the parameter of the BSS configuration of the second link is not updated, after the second link is switched to or the link status of the second link is transited, the second station can directly transmit a data frame on the second link without waiting for a beacon frame to be received. This helps reduce a waiting time required before the data frame is transmitted on the second link.

The multi-link device described in this embodiment of this application has any function of the second MLD in each link processing method in the second aspect of the summary, or has any function of the AP MLD in each link processing method in the part 6. Details are not described herein again.

An embodiment of this application provides a multi-link device. The multi-link device includes one or more stations. A first station and a second station are used as an example.

The first station sends second information of a second link on a first link. The second information is used by an AP MLD to determine whether a BSS configuration of the second link is updated.

The first station receives third information of the second link on the first link. The third information is determined by the AP MLD based on the second information. The third information indicates that the BSS configuration of the second link is not updated or an updated parameter of the BSS configuration of the second link.

The second station transmits a data frame on the second link based on the third information.

It can be learned that, before the multi-link device switches from the first link to the second link or transits a link status of the second link, the second station may learn of the third information. Therefore, after the second link is switched to, the data frame can be directly transmitted on the second link based on the third information without waiting for a beacon frame to be received. This helps reduce a waiting time required before the data frame is transmitted on the second link.

The multi-link device in this embodiment of this application has any function of the first MLD in the third aspect of the summary, or any function of the non-AP MLD in part 7 of the specific implementations. Details are not described herein again.

An embodiment of this application provides a multi-link device. The multi-link device includes one or more access points. A first access point and a second access point are used as an example. The first access point receives second information of a second link on a first link. The second information is used by an AP MLD to determine whether a BSS configuration of the second link is updated.

The first access point sends third information of the second link on the first link. The third information is determined by the AP MLD based on the second information. The third information indicates that the BSS configuration of the second link is not updated or an updated parameter of the BSS configuration of the second link.

It can be learned that, before the multi-link device switches from the first link to the second link or transits a link status of the second link, the first access point may notify the first station of the third information of the second link. Therefore, after the second link is switched to, the second station can directly transmit a data frame on the second link based on the third information without waiting for a beacon frame to be received. This helps reduce a waiting time required before the data frame is transmitted on the second link after the first link is switched to the second link or the link status of the second link is transited.

The multi-link device in this embodiment of this application has any function of the second MLD in the fourth aspect of the summary, or any function of the AP MLD in part 7 of the specific implementations. Details are not described herein again.

To implement the functions in the foregoing method provided in embodiments of this application, the access point and the station may include a hardware structure and a software module, to implement the foregoing functions in a form of the hardware structure, the software module, or a combination of the hardware structure and the software module. A function in the foregoing functions may be performed in a form of the hardware structure, the software module, or a combination of the hardware structure and the software module. The multi-link device described below may be an AP MLD, or may be a non-AP MLD, or may be a chip, a chip system, or a processor that supports the multi-link device in implementing the foregoing method, or may be a chip, a chip system, or a processor that supports the multi-link device in implementing the foregoing method. The multi-link device may be configured to implement the method described in the foregoing method embodiments. For details, refer to the descriptions in the foregoing method embodiments.

FIG. 10 is a schematic diagram of a structure of a multi-link device according to an embodiment of this application. The multi-link device may include one or more processors 1001. The processor 1001 may be a general-purpose processor, a dedicated processor, or the like. The processor 1001 may be configured to: control one or more access points, one or more access point chips, one or more stations, one or more station chips, and the like in the multi-link device, execute a software program, and process data of the software program.

Optionally, the multi-link device may include one or more memories 1002. The memory 1002 may store an instruction 1004. The instruction may be run on the processor 1001, so that the multi-link device performs the method described in the foregoing method embodiments. Optionally, the memory 1002 may further store data, for example, store the first information, the second information, or the third information in the foregoing method embodiment. The processor 1001 and the memory 1002 may be separately disposed, or may be integrated together.

Optionally, the multi-link device may further include a transceiver 1005 and an antenna 1006. The transceiver 1005 may be referred to as a transceiver unit, a transceiver machine, a transceiver circuit, or the like, and is configured to implement a transceiver function. The transceiver 1005 may include a receiver and a transmitter. The receiver may be referred to as a receiving machine, a receiver circuit, or the like, and is configured to implement a receiving function. The transmitter may be referred to as a transmitting machine, a transmitter circuit, or the like, and is configured to implement a sending function. The transceiver 1005 is configured to perform the receiving or sending operation in the foregoing method embodiments.

In an optional implementation,
the transceiver 1005 is configured to receive first information of a second link on a first link.

A plurality of links between a first MLD and a second MLD include the first link and the second link.

The first information is used by the first MLD to determine whether a basic service set BSS configuration of the second link is updated.

The transceiver 1005 is further configured to: if the BSS configuration of the second link is not updated, transmit a data frame on the switched-to second link or the second link whose link status is transited.

It can be learned that the multi-link device may learn whether a parameter of the BSS configuration of the second link is updated. When the parameter of the BSS configuration of the second link is not updated, the multi-link device can directly transmit the data frame on the switched-to second link or the second link whose link status is transited. This shortens a waiting time required before the data frame is transmitted on the switched-to second link or the second link whose link status is transited.

The multi-link device described in this embodiment of this application has any function of the first MLD in the first aspect of the summary and any function of the non-AP MLD in the part 6 of the specific implementations. For all technical details of the multi-link device, refer to the content in the first aspect of the summary and in the part 6 of the specific implementations. Details are not described herein again.

In another optional implementation,
the processor 1001 is configured to determine first information of a second link. The first information is used by a first MLD to determine whether a basic service set BSS configuration of the second link is updated.

The transceiver 1005 is configured to send the first information of the second link on a first link.

A plurality of links between a second MLD and the first MLD include the first link and the second link.

The second link is a link that is switched from the first link or a link whose link status is transited.

It can be learned that this implementation helps the first MLD to determine whether a parameter of the BSS configuration of the second link is updated. When the parameter of the BSS configuration of the second link is not updated, the first MLD can directly transmit a data frame on the switched-to second link or the second link whose link status is transited. This shortens a waiting time required before the data frame is transmitted on the switched-to second link or the second link whose link status is transited.

The multi-link device described in this embodiment of this application has any function of the second MLD in each link processing method in the second aspect of the summary, or has any function of the AP MLD in each link processing method in the part 6. Details are not described herein again.

In still another optional implementation,
the transceiver 1005 is configured to send second information of a second link on a first link. The second information is used by an second MLD to determine whether a BSS configuration of the second link is updated.

The transceiver 1005 is configured to receive third information on the first link. The third information is determined by the second MLD based on the second information. The third information indicates that a BSS configuration of the second link is not updated or indicates an updated parameter of the BSS configuration of the second link. In this way, a first MLD can transmit a data frame on the second link based on the third information.

It can be learned that the multi-link device can directly transmit the data frame on the switched-to second link or the second link whose status is transited. This reduces a waiting time required before the data frame is transmitted on the switched-to second link or the second link whose status is transited.

In still another optional implementation,
the transceiver 1005 is configured to receive second information of a second link on a first link. The second information is used by the multi-link device to determine whether a BSS configuration of the second link is updated.

The transceiver 1005 is configured to send third information on the first link. The third information is determined by the multi-link device based on the second information. The third information indicates that the BSS configuration of the second link is not updated or an updated parameter of the BSS configuration of the second link.

It can be learned that, because the multi-link device may notify the non-AP MLD on the first link whether the BSS configuration of the second link is updated or the updated parameter of the BSS configuration of the second link, the non-AP MLD can directly transmit a data frame on the switched-to second link or the second link whose status is transited without waiting for a beacon frame to be received. This reduces a waiting time required before the data frame is transmitted on the switched-to second link or the second link whose status is transited.

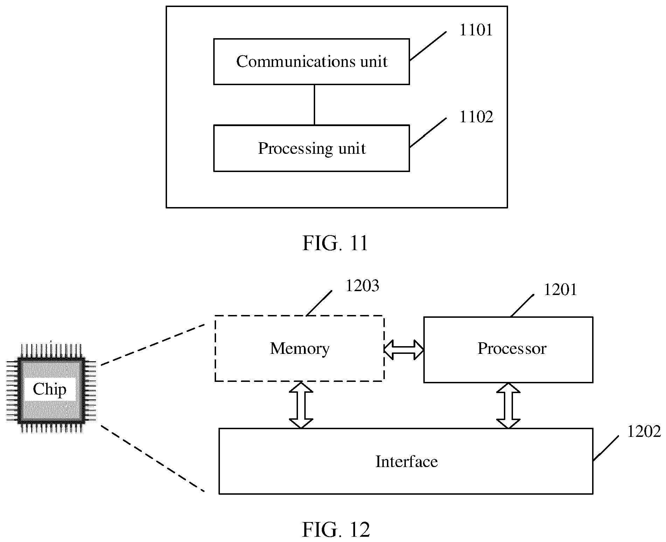

FIG. 11 is a schematic diagram of a structure of another multi-link device according to an embodiment of this application. The multi-link device may include a communications unit 1101 and a processing unit 1102. The communications unit 1101 may include a sending unit and a receiving unit. The sending unit is configured to implement a sending function, the receiving unit is configured to implement a receiving function, and the communications unit 1101 may implement a sending function and/or a receiving function. The communications unit may also be described as a transceiver unit.

In an optional implementation,
the communications unit 1101 is configured to receive first information of a second link on a first link.

A plurality of links between a first MLD and a second MLD include the first link and the second link.

The first information is used by the first MLD to determine whether a basic service set BSS configuration of the second link is updated.

The communications unit 1101 is further configured to: if the BSS configuration of the second link is not updated, transmit a data frame on the switched-to second link or the second link whose link status is transited.

It can be learned that the multi-link device may learn whether a parameter of the BSS configuration of the second link is updated. When the parameter of the BSS configuration of the second link is not updated, the multi-link device can directly transmit the data frame on the switched-to second link or the second link whose link status is transited. This shortens a waiting time required before the data frame is transmitted on the switched-to second link or the second link whose link status is transited.

The multi-link device described in this embodiment of this application has any function of the first MLD in the first aspect of the summary and any function of the non-AP MLD in the part 6 of the specific implementations. For all technical details of the multi-link device, refer to the content in the first aspect of the summary and in the part 6 of the specific implementations. Details are not described herein again.

In another optional implementation,
the processing unit 1102 is configured to determine first information of a second link. The first information is used by a first MLD to determine whether a basic service set BSS configuration of the second link is updated.

The communications unit 1101 is configured to send the first information of the second link on a first link.

A plurality of links between a second MLD and the first MLD include the first link and the second link.

The second link is a link that is switched from the first link or a link whose link status is transited.

It can be learned that this implementation helps the first MLD to determine whether a parameter of the BSS configuration of the second link is updated. When the parameter of the BSS configuration of the second link is not updated, the first MLD can directly transmit a data frame on the switched-to second link or the second link whose link status is transited. This shortens a waiting time required before the data frame is transmitted on the switched-to second link or the second link whose link status is transited.

The multi-link device described in this embodiment of this application has any function of the second MLD in each link processing method in the second aspect of the summary, or has any function of the AP MLD in each link processing method in the part 6. Details are not described herein again.

In still another optional implementation,
the communications unit 1101 is configured to send second information of a second link on a first link. The second information is used by an second MLD to determine whether a BSS configuration of the second link is updated.

The communications unit 1101 is configured to receive third information on the first link. The third information is determined by the second MLD based on the second information. The third information indicates that a BSS configuration of the second link is not updated or indicates an updated parameter of the BSS configuration of the second link. In this way, a first MLD can transmit a data frame on the second link based on the third information.

It can be learned that the multi-link device can directly transmit the data frame on the switched-to second link or the second link whose status is transited. This reduces a waiting time required before the data frame is transmitted on the switched-to second link or the second link whose status is transited.

In still another optional implementation,
the communications unit 1101 is configured to receive second information of a second link on a first link. The second information is used by the multi-link device to determine whether a BSS configuration of the second link is updated.

The communications unit 1101 is configured to send third information on the first link. The third information is determined by the multi-link device based on the second information. The third information indicates that the BSS configuration of the second link is not updated or an updated parameter of the BSS configuration of the second link.

It can be learned that, because the multi-link device may notify the non-AP MLD on the first link whether the BSS configuration of the second link is updated or the updated parameter of the BSS configuration of the second link, the non-AP MLD can directly transmit a data frame on the switched-to second link or the second link whose status is transited without waiting for a beacon frame to be received. This reduces a waiting time required before the data frame is transmitted on the switched-to second link or the second link whose status is transited.

It may be understood that for specific implementation of each functional unit included in the multi-link device, refer to the foregoing embodiments. Details are not described herein again.

FIG. 12 is a schematic diagram of a structure of a chip according to an embodiment of this application. As shown in FIG. 12, the chip shown in FIG. 12 includes a processor 1201 and an interface 1202. There may be one or more processors 1201. There may be a plurality of interfaces 1202.

For a case in which the chip is configured to implement functions of the station in embodiments of this application:
in an embodiment,
the transceiver 1202 is configured to receive first information of a second link on a first link.

A plurality of links between a first MLD and a second MLD include the first link and the second link.

The first information is used by the first MLD to determine whether a basic service set BSS configuration of the second link is updated.
the interface 1202 is further configured to: if the BSS configuration of the second link is not updated, transmit a data frame on the switched-to second link or the second link whose link status is transited.

It can be learned that the multi-link device may learn whether a parameter of the BSS configuration of the second link is updated. When the parameter of the BSS configuration of the second link is not updated, the multi-link device can directly transmit the data frame on the switched-to second link or the second link whose link status is transited. This shortens a waiting time required before the data frame is transmitted on the switched-to second link or the second link whose link status is transited.

The multi-link device described in this embodiment of this application has any function of the first MLD in the first aspect of the summary and any function of the non-AP MLD in the part 6 of the specific implementations. For all technical details of the multi-link device, refer to the content in the first aspect of the summary and in the part 6 of the specific implementations. Details are not described herein again.

In another optional implementation,
the processor 1201 is configured to determine first information of a second link. The first information is used by a first MLD to determine whether a basic service set BSS configuration of the second link is updated.

The interface 1202 is configured to send the first information of the second link on a first link.

A plurality of links between a second MLD and the first MLD include the first link and the second link.

The second link is a link that is switched from the first link or a link whose link status is transited.

It can be learned that this implementation helps the first MLD to determine whether a parameter of the BSS configuration of the second link is updated. When the parameter of the BSS configuration of the second link is not updated, the first MLD can directly transmit a data frame on the switched-to second link or the second link whose link status is transited. This shortens a waiting time required before the data frame is transmitted on the switched-to second link or the second link whose link status is transited.

The multi-link device described in this embodiment of this application has any function of the second MLD in each link processing method in the second aspect of the summary, or has any function of the AP MLD in each link processing method in the part 6. Details are not described herein again.

In still another optional implementation,
the interface 1202 is configured to send second information of a second link on a first link. The second information is used by an second MLD to determine whether a BSS configuration of the second link is updated.

The interface 1202 is configured to receive third information on the first link. The third information is determined by the second MLD based on the second information. The third information indicates that the BSS configuration of the second link is not updated or an updated parameter of the BSS configuration of the second link. In this way, a first MLD can transmit a data frame on the second link based on the third information.

It can be learned that the multi-link device can directly transmit the data frame on the switched-to second link or the second link whose status is transited. This reduces a waiting time required before the data frame is transmitted on the switched-to second link or the second link whose status is transited.

In still another optional implementation,
the interface 1202 is configured to receive second information of a second link on a first link. The second information is used by the multi-link device to determine whether a BSS configuration of the second link is updated.

The interface 1202 is configured to send third information on the first link. The third information is determined by the multi-link device based on the second information. The third information indicates that the BSS configuration of the second link is not updated or an updated parameter of the BSS configuration of the second link.

It can be learned that, because the multi-link device may notify the non-AP MLD on the first link whether the BSS configuration of the second link is updated or the updated parameter of the BSS configuration of the second link, the non-AP MLD can directly transmit a data frame on the switched-to second link or the second link whose status is transited without waiting for a beacon frame to be received. This reduces a waiting time required before the data frame is transmitted on the switched-to second link or the second link whose status is transited.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

A person of ordinary skill in the art may be aware that, in combination with the examples described in the embodiments disclosed in this specification, method steps and units may be implemented by electronic hardware, computer software, or a combination thereof. To clearly describe interchangeability between the hardware and the software, the foregoing has generally described steps and compositions of each embodiment according to functions. Whether the functions are performed by using hardware or software depends on particular applications and design constraints of the technical solutions. A person of ordinary skill in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing described system, apparatus, and unit, reference may be made to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one position, or may be distributed on a plurality of network units. A part or all of the units may be selected based on actual requirements to achieve the objectives of the solutions of embodiments of this application.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions in this application essentially, or the part contributing to the conventional art, or all or a part of the technical solutions may be implemented in the form of a software product. The computer software product is stored in a storage medium and includes several instructions for instructing a computer device (which may be a personal computer, a server, a network device, or the like) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A link processing method, wherein the method comprises:
receiving, by a first multi-link device (MLD), first information of a second link on a first link, wherein
a plurality of links between the first MLD and a second MLD comprise the first link and the second link; and
the first information is used by the first MLD to determine whether a basic service set BSS configuration of the second link is updated; and
if the BSS configuration of the second link is not updated, transmitting, by the first MLD, a data frame on the switched-to second link or the second link whose link status is transited.

2. The method according to claim 1, wherein the data frame comprises an uplink data frame, a quality of service null (QoS NULL) frame, or a link status notification frame, and the link status notification frame indicates that the second link is in an awake or enable state.

3. The method according to claim 1 or 2, wherein
the first information of the second link is a sequence number of the BSS configuration, or an access point configuration sequence number (AP-CSN), or a check beacon (check beacon) value that is in the second MLD and that identifies the second link.

4. The method according to any one of claims 1 to 3, wherein
the first information of the second link is carried in a link switching response message, or a cross-link information report message, or a medium access control frame, or a response frame for negotiating a mapping relationship between a traffic identifier and a link, or a beacon frame, or a control field of the data frame, or a request frame for negotiating a mapping relationship between a traffic identifier and a link that is received on the first link.

5. The method according to claim 4, wherein if the first information of the second link is carried in the request frame for negotiating the mapping relationship between the traffic identifier and the link that is received on the first link, before the transmitting, by the first MLD, a data frame on the second link, the method further comprises:
sending, by the first MLD, the response frame for negotiating the mapping relationship between the traffic identifier and the link on the first link, wherein
the response frame for negotiating the mapping relationship between the traffic identifier and the link indicates whether the first MLD accepts a mapping configuration request between the traffic identifier and the link.

6. The method according to any one of claims 1 to 5, wherein if the BSS configuration of the second link is updated, the method further comprises:
sending, by the first MLD, second information on the second link, wherein the second information is a sequence number of the BSS configuration, an access point configuration sequence number (AP-CSN), or a check beacon (check beacon) value that is stored in the first MLD and that identifies the second link; and
receiving, by the first MLD on the second link, an updated parameter of the BSS configuration of the second link, wherein the updated parameter of the BSS configuration of the second link is determined based on the second information.

7. The method according to claim 6, wherein
the second information of the second link is carried, for sending, in a unicast probe request frame on the second link; and
the updated parameter of the BSS configuration of the second link is carried in a probe response frame that is received on the second link, and the probe response frame is returned based on the unicast probe request frame.

8. The method according to claim 6 or 7, wherein before the receiving, by a first multi-link device (MLD), first information of a second link on a first link, the method further comprises:
obtaining, by the first MLD, the second information of the second link from a beacon (beacon) frame, a multi-link probe response frame, or a multi-link association response frame of the first link, and storing the second information of the second link, wherein
the second information is the sequence number of the BSS configuration, the access point configuration sequence number (AP-CSN), or the check beacon (check beacon) value that is stored in the first MLD and that identifies the second link.

9. The method according to claim 8, wherein
the beacon (beacon) frame, the multi-link probe response frame, or the multi-link association response frame of the first link further carries the link status and channel utilization of the second link.

10. A link processing method, wherein the method comprises:
determining, by a second multi-link device (MLD), first information of a second link, wherein the first information is used by a first MLD to determine whether a basic service set BSS configuration of the second link is updated;
sending, by the second MLD, the first information of the second link on a first link, wherein
a plurality of links between the second MLD and the first MLD comprise the first link and the second link; and
the second link is a link that is switched from the first link or a link whose link status is transited.

11. The method according to claim 10, wherein the method further comprises:
receiving, by the second MLD, a data frame on the second link, wherein the data frame comprises an uplink data frame, a quality of service null (QoS NULL) frame, or a link status notification frame, and the link status notification frame indicates that the second link is in an awake or enable state.

12. The method according to claim 10 or 11, wherein
the first information of the second link is a sequence number of the BSS configuration, or an access point configuration sequence number (AP-CSN), or a check beacon (check beacon) value that is in the second MLD and that identifies the second link.

13. The method according to any one of claims 10 to 12, wherein
the first information of the second link is carried, for sending, in a link switching response message, or a cross-link information report message, or a medium access control frame, or a response frame for negotiating a mapping relationship between a traffic identifier and a link, or a beacon frame, or a control field of the data frame, or a request frame for negotiating a mapping relationship between a traffic identifier and a link that is on the first link.

14. The method according to claim 13, wherein if the first information of the second link is carried, for sending, in the request frame for negotiating the mapping relationship between the traffic identifier and the link that is received on the first link, before transmitting, by the second MLD, the data frame on the second link, the method further comprises:
receiving, by the second MLD, the response frame for negotiating the mapping relationship between the traffic identifier and the link on the first link, wherein
the response frame for negotiating the mapping relationship between the traffic identifier and the link indicates whether the first MLD accepts a mapping configuration request between the traffic identifier and the link.

15. The method according to any one of claims 10 to 14, wherein the method further comprises:
receiving, by the second MLD, second information on the second link, wherein the second information is a sequence number of the BSS configuration, an access point configuration sequence number (AP-CSN), or a check beacon (check beacon) value that is stored in the first MLD and that identifies the second link; and
sending, by the second MLD on the second link, an updated parameter of the BSS configuration of the second link based on the second information.

16. The method according to claim 15, wherein
the second information of the second link is carried in a unicast probe request frame that is received on the second link; and
the updated parameter of the BSS configuration of the second link is carried, for sending, in a probe response frame on the second link, and the probe response frame is sent based on the unicast probe request frame.

17. The method according to claim 12 to 16, wherein before the sending, by the second multi-link device (MLD), the first information of the second link on a first link, the method further comprises:
sending, by the second MLD on the first link, a beacon (beacon) frame, a multi-link probe response frame, or a multi-link association response frame of the first link; and the beacon frame, the multi-link probe response frame, or the multi-link association response frame comprises the second information of the second link.

18. The method according to claim 17, wherein
the beacon (beacon) frame, the multi-link probe response frame, or the multi-link association response frame of the first link further carries the link status and channel utilization of the second link.

19. A multi-link device, comprising:
an interface and a processing circuit, wherein the interface is coupled to the processing circuit, the interface is configured to communicate with another communications apparatus, and the processing circuit is configured to run a program, so that the multi-link device implements the method according to any one of claims 1 to 9 or the method according to any one of claims 10 to 18.

20. A computer-readable storage medium, wherein the computer-readable storage medium stores a computer program, and the computer program may be executed by a computer to control the computer to perform the method according to any one of claims 1 to 9 or the method according to any one of claims 10 to 18.

21. A computer program product, comprising a computer program, wherein when the computer program runs on a computer, the computer is enabled to perform the method according to any one of claims 1 to 9, or the computer is enabled to perform the method according to any one of claims 10 to 18.

22. A multi-link device, configured to perform the method according to any one of claims 1 to 9, or configured to perform the method according to any one of claims 10 to 18.
